# EUROPEAN PATENT APPLICATION

(11) **EP 4 641 369 A1**
(43) Date of publication of application: **29.10.2025**
(21) Application number: 25172120.5
(22) Date of filing: 24.04.2025
(51) Int. Cl.: G06F 8/34, G06F 8/38, G06F 9/451

(54) **OPERATION AUTOMATION SYSTEM, OPERATION AUTOMATION DEVICE, OPERATION AUTOMATION METHOD, AND PROGRAM**

(30) Priority: 26.04.2024 JP 2024072136
(71) Applicant: NTT Advanced Technology Corporation, Tokyo 163-1436 (JP)
(72) Inventor: TAKENO, Hiroshi, Tokyo, 163-1436 (JP); NAKAMURA, Masashi, Tokyo, 163-1436 (JP); IZUMI, Nobuto, Tokyo, 163-1436 (JP); YAMASAKI, Satoshi, Tokyo, 163-1436 (JP)
(74) Representative: Brevalex

(57) **Abstract**

A storage stores a scenario including a web page identifier, an operation target web element identifier, and a web operation on the operation target web element and stores auxiliary information for identifying the operation target in a web page. A scenario executor reads a web page of the web page identifier included in the scenario with a web browser, determines whether or not the operation target web element identifier is present within the read web page. The scenario executor selects a new operation target web element by analyzing content of the read web page using the auxiliary information when it is determined that the operation target web element identifier is absent in the determination process, and performs a web operation described in the scenario for the web element selected in the analysis process.

## Description

### BACKGROUND OF THE INVENTION

### Field of the Invention

The present invention relates to an operation automation system, an operation automation device, an operation automation method, and a program.

Priority is claimed on Japanese Patent Application No. 2024-072136, filed April 26, 2024, the content of which is incorporated herein by reference.

### Description of Related Art

Robotic process automation (RPA), which is a type of automation tool, is technology for automatically executing routine tasks for applications and the like that have previously been performed manually by operating a user interface of an information processing device such as a personal computer (PC). For example, the RPA executes a scenario that describes a task procedure to reproduce a task that has been performed manually (see, for example, Japanese Patent No. 4883638).

On the other hand, many office tasks in recent years have involved a process of operating internal and external web pages. Therefore, there is RPA that can automate web page operations (for example, see "WinActor Suite Library Browser Operation (three-value acquisition)," [online], NTT Advanced Technology Corporation, retrieved on July 20, 2023, <URL:https://winactor.biz/sweet/2021/09/30_4617.html>).

### SUMMARY OF THE INVENTION

RPA implements automatic web operations by breaking down the web operations into processes for web elements on a web page to describe the web operations and then operating each web element in accordance with the description. However, there are cases where the description of an operation target web page is changed after the description of an automation process. **In** the conventional technology, in such cases, there is a problem in that the operation target web element cannot be found and an operation of the automation process cannot be performed.

**In** view of the above-described circumstances, an objective of the present invention is to provide an operation automation system, an operation automation device, an operation automation method, and a program capable of assisting in finding a web element designated as an operation target before a change even if description of the web page is changed.

One aspect of the present invention is an operation automation system including: a storage configured to store a scenario including a web page identifier for identifying a web page, an operation target web element identifier for identifying an operation target web element within the web page, and a web operation on the operation target web element and store analysis information including information about description of the operation target web element and information about description of a surrounding web element that is a web element around the operation target web element acquired based on a pre-update web page that is a web page at the time of creation of the scenario as auxiliary information for identifying the operation target in the web page; and a scenario executor configured to read a web page of the web page identifier included in the scenario with a web browser, perform a determination process of determining whether or not the operation target web element identifier is present within the read web page, perform the web operation on the operation target web element as the web element identified by the operation target web element identifier when it is determined that the operation target web element identifier is present in the determination process, perform an analysis process of selecting a new operation target web element from among web elements included in the web page by analyzing content of the read web page using the auxiliary information when it is determined that the operation target web element identifier is absent in the determination process, and perform the web operation for the operation target web element on the new operation target web element selected in the analysis process.

One aspect of the present invention may be the above-described operation automation system wherein, in the analysis process, the scenario executor designates at least some web elements included in a post-update web page that is the web page at the time of execution of the scenario as new operation target candidates, generates analysis information including information about description of a web element of the candidate and information about description of a web element around the web element of the candidate acquired based on the post-update web page for each candidate, calculates an index indicating a possibility that the candidate will be a new operation target using the generated analysis information of the candidate and the analysis information of the operation target web element read from the storage, narrows down the number of candidates based on the calculated index, and designates a candidate web element narrowed down in the analysis process or a web element selected by a user from a plurality of candidate web elements narrowed down in the analysis process, as the new operation target web element.

One aspect of the present invention may be the above-described operation automation system, wherein the scenario executor acquires a tag of the operation target web element or information of a display position from the analysis information of the operation target web element and selects a web element having the same tag as the operation target web element or a web element whose display position is within a predetermined range from the display position of the operation target web element among web elements of the post-update web page as the candidate.

One aspect of the present invention may be the above-described operation automation system, wherein the analysis information includes identification information of the web page, the operation target web element identifier, content around the operation target web element in the pre-update web page, a surrounding web element identifier for identifying the surrounding web element, and content around the surrounding web element in the pre-update web page.

One aspect of the present invention may be the above-described operation automation system, wherein the surrounding web element is another web element that has a short distance from the operation target web element in a syntax tree of the web element included in the web page.

One aspect of the present invention may be the above-described operation automation system, wherein the auxiliary information further includes a model for calculating the index using the analysis information of the candidate and the analysis information of the operation target web element.

One aspect of the present invention may be the above-described operation automation system, wherein the operation automation system further includes: a learner configured to train the model using a plurality of items of training data of a set of analysis information of an operation target web element obtained based on a pre-update learning web page and analysis information of a new operation target web element obtained based on the learning web page that has been updated.

One aspect of the present invention may be the above-described operation automation system, wherein the learner trains the model further using a plurality of items of training data of a set of analysis information of an operation target web element obtained based on a learning web page and analysis information of a new operation target web element obtained based on a web page updated by adding, moving, or deleting a web element according to a predetermined probability with respect to the learning web page or a web element that is not a new operation target.

One aspect of the present invention may be the above-described operation automation system, the operation automation system further includes: a scenario editor configured to generate analysis information about an operation target web element included in an edited scenario and write the generated analysis information to the storage in association with the generated scenario.

One aspect of the present invention is an operation automation device including: a storage configured to store a scenario including a web page identifier for identifying a web page, an operation target web element identifier for identifying an operation target web element within the web page, and a web operation on the operation target web element and store analysis information including information about description of the operation target web element and information about description of a surrounding web element that is a web element around the operation target web element acquired based on a pre-update web page that is a web page at the time of creation of the scenario as auxiliary information for identifying the operation target in the web page; and a scenario executor configured to read a web page of the web page identifier included in the scenario with a web browser, perform a determination process of determining whether or not the operation target web element identifier is present within the read web page, perform the web operation on the operation target web element as the web element identified by the operation target web element identifier when it is determined that the operation target web element identifier is present in the determination process, perform an analysis process of selecting a new operation target web element from among web elements included in the web page by analyzing content of the read web page using the auxiliary information when it is determined that the operation target web element identifier is absent in the determination process, and perform the web operation for the operation target web element on the new operation target web element selected in the analysis process.

One aspect of the present invention is an operation automation method including: acquiring a scenario from a storage storing a scenario including a web page identifier for identifying a web page, an operation target web element identifier for identifying an operation target web element within the web page, and a web operation on the operation target web element and storing analysis information including information about description of the operation target web element and information about description of a surrounding web element that is a web element around the operation target web element acquired based on a pre-update web page that is a web page at the time of creation of the scenario as auxiliary information for identifying the operation target in the web page, reading a web page of the web page identifier included in the acquired scenario with a web browser, and determining whether or not the operation target web element identifier is present within the read web page; and performing the web operation on the operation target web element as the web element identified by the operation target web element identifier when it is determined that the operation target web element identifier is present in the determination, performing an analysis process of selecting a new operation target web element from among web elements included in the web page by analyzing content of the read web page using the auxiliary information when it is determined that the operation target web element identifier is absent in the determination, and performing the web operation for the operation target web element on the new operation target web element selected in the analysis process.

One aspect of the present invention is a program for causing a computer to function as the above-described operation automation system.

### BRIEF DESCRIPTION OF THE DRAWINGS

FIG. 1 is a diagram showing an overall configuration of an operation automation system according to an embodiment of the present invention.
FIG. 2 is a diagram showing an example in which a web page is modeled according to the embodiment.
FIGS. 3A and 3B are a diagram showing an example of an html representation and a syntax tree representation of web page content according to the embodiment.
FIGS. 4A and 4B are diagrams showing a web page content representation before a web page is updated and a display of a web browser according to the embodiment.
FIGS. 5A to 5C are diagrams showing a web page content representation after a web page is updated and a display of the web browser according to the embodiment.
FIGS. 6A to 6C are diagrams showing a web page content representation after a web page is updated and a display of the web browser according to the embodiment.
FIG. 7A and 7B are diagrams showing an example of analysis information according to the embodiment.
FIG. 8 is a diagram showing an example of a scenario according to the embodiment.
FIG. 9 is a diagram showing an example of a configuration of an RPA processor according to the embodiment.
FIG. 10 is a flowchart showing an example of a scenario editing process of the operation automation device according to the embodiment.
FIG. 11 is a flowchart showing an example of a scenario execution process of the operation automation device according to the embodiment.
FIG. 12 is a flowchart showing an example of an operation of an operation target web element decider according to the embodiment.
FIG. 13 is a flowchart showing an example of an operation of the operation target web element decider according to the embodiment.
FIG. 14 is a flowchart showing an example of an operation of an analysis information generator according to the embodiment.
FIG. 15 is a diagram showing an example of a configuration of a model generation device according to the embodiment.
FIG. 16 is a flowchart showing an example of an operation of a pseudo-training data generator according to the embodiment.
FIG. 17 is a flowchart showing an example of an operation of the pseudo-training data generator according to the embodiment.
FIG. 18 is a flowchart showing an example of an operation of a regular training data generator according to the embodiment.
FIG. 19 is a diagram showing a hardware configuration of an operation automation device according to the embodiment.

### DETAILED DESCRIPTION OF THE INVENTION

Hereinafter, embodiments of the present invention will be described in detail with reference to the drawings. An operation automation device according to the present embodiment is equipped with RPA. The RPA is a type of automation tool and its functions include a function of automatically operating web pages. Data in which the automatic operation of the RPA is described is referred to as a scenario. In the present embodiment, when the description of the web page is changed after a process of an automatic operation to be executed by the RPA is described in the scenario, the system assists in finding an operation target web element. Thereby, it is easier to respond to changes in the web page.

To operate a web page with the RPA, the web element to be operated (a link, a button, a form, or the like) is directly identified as an operation target and an event (operation) such as clicking or character input for the operation target is transmitted. There are three main methods for identifying web elements.
(1) Coordinates are directly designated on a screen.
(2) The coordinates are acquired by performing image recognition on the screen.
(3) A position of an object to be operated in the html syntax (an extensible markup language (XML) path language (XPath) or the like) is designated from hypertext markup language (html) data describing the screen.

Among the above-described methods, method (3) is superior because it does not depend on an RPA execution environment such as a display size and does not introduce a recognition error. However, when the description of the web page is changed after the operation content for the operation target web page is decided and described in the scenario, methods (1) and (2) are likely to enable the RPA operation to be continuously executed as long as the appearance of the web page does not change, whereas method (3) will become inoperable when a logical configuration is changed even if the appearance of the web page does not change.

To deal with this situation, it is necessary to access a changed web page, ascertain content of the change, and then modify operation content described in the scenario. However, manually performing this process is a cumbersome task and it is difficult to deal with web pages that are frequently changed. Moreover, it may be difficult to ascertain how the operation target has been changed in the changed web page. Furthermore, after the operation content is modified, it is necessary to start over the operation described in the scenario from the beginning, which is costly. In the present embodiment, by solving such problems, RPA resistant to changes in web pages can be implemented and user convenience can be improved.

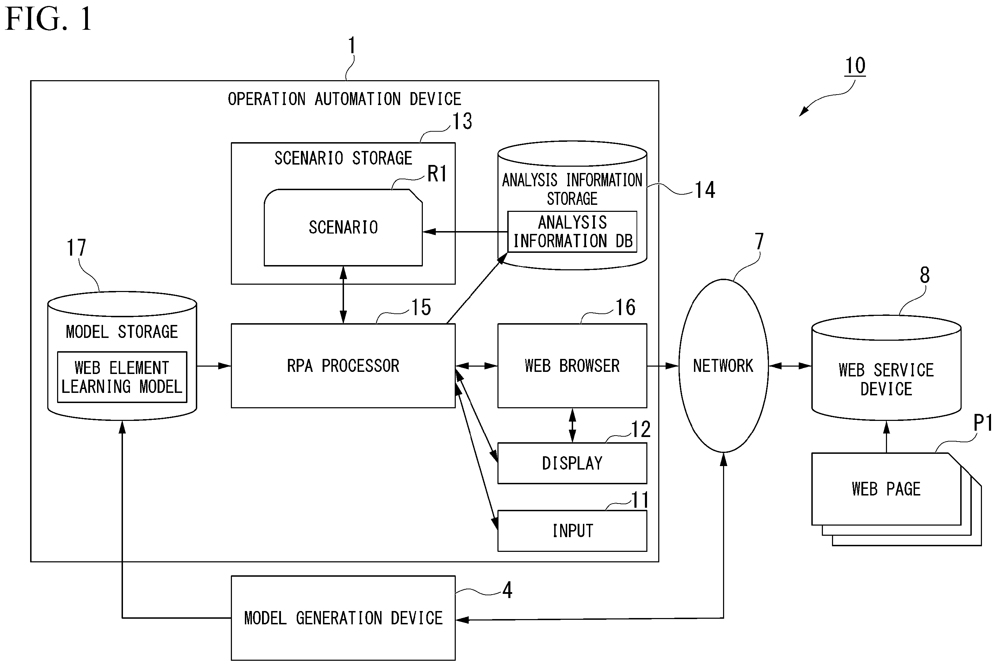

FIG. 1 is a diagram showing an example of an overall configuration of an operation automation system 10 according to the embodiment of the present invention. In FIG. 1, only functional blocks related to the present embodiment are extracted and shown. The operation automation system 10 has an operation automation device 1 and a model generation device 4. As shown in FIG. 1, the operation automation device 1 and the model generation device 4 are connected to a web service providing device 8 via a network 7. The network 7 and the web service providing device 8 can be implemented by any general-purpose technology. For example, the network 7 may be a public network such as the Internet, a private network such as a local area network (LAN), or a combination thereof. The web service providing device 8 provides a web page P1 to the operation automation device 1 via the network 7. The web page P1 is content data of the web page. Although only one operation automation device 1 and one web service providing device 8 are shown in FIG. 1, the number of operation automation devices 1 and the number of web service providing devices 8 are optional.

The operation automation device 1 is, for example, a computer device. The operation automation device 1 includes an input 11, a display 12, a scenario storage 13, an analysis information storage 14, an RPA processor 15, a web browser 16, and a model storage 17.

The input 11 is a user interface that is operated by a user when an instruction of the user is input to the operation automation device 1. The input 11 is configured using existing input devices such as a keyboard, a pointing device (a mouse, a tablet, or the like), a button, a touch panel, and the like. The display 12 displays data. The display 12 is an image display device such as a cathode-ray tube (CRT) display, a liquid crystal display, an organic electroluminescence (EL) display, or the like. In addition, the display 12 may be configured as a touch panel integrated with the input 11.

The scenario storage 13 stores the RPA scenario R1. The scenario R1 is data written in a description format executable by the RPA processor 15. The scenario R1 indicates the execution order of operations, operation targets, and events to be performed on the operation targets. The events include operations to be performed on the operation targets and parameter values to be used when the operations are executed. When parameters are not used in the operations, the events do not include parameter values. The operations indicated by the events are, for example, operations performed by the input 11 on the operation targets. The operation targets include an application for implementing a predetermined function of the operation automation device 1 and a web browser. When the web browser is the operation target, for example, the acquisition of a web page P1 with a designated universal resource locator (URL) and web operations to be performed by the input 11 on web elements in the acquired web page P1 are indicated in the events.

The analysis information storage 14 stores a database (DB) of analysis information. The analysis information is used to estimate a movement destination of a web element in a case where a web element within the web page P1 described as an operation target at the time of creation of a scenario is moved to another location on an html syntax within the web page P1 at the time of execution of the scenario. Hereinafter, the web element to be operated by RPA is referred to as an "operation target web element." Moreover, the fact that the operation target web element is described at another location on the html syntax after the web page P1 is updated indicates that the operation target web element has moved.

The RPA processor 15 has two operation modes for creating and executing the scenario R1, i.e., a scenario creation mode and a scenario execution mode. In the scenario creation mode, the RPA processor 15 decides an event of an operation to be performed on a web element within the acquired web page P1 in response to an instruction input by a scenario creator through the input 11 and describes the event in the scenario R1. Furthermore, the RPA processor 15 extracts analysis information for the operation target web element based on information included in the acquired web page P1, links the analysis information to the scenario R1, and stores the analysis information in the analysis information DB of the analysis information storage 14. In the scenario execution mode, the RPA processor 15 acquires the web page P1 provided by the web service providing device 8 via the network 7 using the web browser provided by the web browser 16 according to content described in the scenario R1, and performs a web operation on the acquired web page P1. When it is determined that the operation target web element described in the scenario R1 has moved, the RPA processor 15 selects a movement destination candidate web element from the web page P1 and generates analysis information for the selected web element. The RPA processor 15 selects a movement destination web element from the movement destination candidates using the analysis information of the operation target web element and the analysis information of the movement destination candidate web element and performs the web element operation described in the scenario R1 on the movement destination web element. Alternatively, the RPA processor 15 performs a web element operation described in the scenario R1 with respect to the movement destination web element selected by the user using the input 11 from among a plurality of movement destination candidates selected using analysis information of the operation target web element and analysis information of the movement destination candidate web element.

The web browser 16 provides a web browser. The web browser 16 can be implemented by any general-purpose technology. The web browser provided by the web browser 16 is a generally used web browser to which an extended function generally used for developing web pages has been added. The web browser executed by the web browser 16 acquires the web page P1 of the URL input from the RPA processor 15 from the web service providing device 8 and displays the acquired web page P1 on the display 12. The web browser executed by the web browser 16 also operates the web element of an XPath input from the RPA processor 15. Furthermore, the web browser executed by the web browser 16 inputs the content included in the web page P1 and the web element within the content and acquires the XPath of the input web element from the input content. Moreover, the web browser executed by the web browser 16 can acquire display coordinates of a designated web element on the display screen of the web browser by using the extended function. Furthermore, by sending a program from the RPA processor 15, the web browser executed by the web browser 16 can analyze the acquired web page P1 and return an analysis result to the RPA processor 15.

The model storage 17 stores a web element learning model created by the model generation device 4. The web element learning model is a model for inputting analysis information of the operation target web element and analysis information of a movement destination candidate of the operation target web element as inputs and calculating a probability that the operation target web element of the movement destination candidate will be the movement destination of the operation target web element.

The model generation device 4 acquires the web page P1 provided by the web service providing device 8 via the network 7 using a web browser like the RPA processor 15. The model generation device 4 generates a web element learning model using the acquired web page P1. The model generation device 4 outputs the generated web element learning model to the operation automation device 1. The model generation device 4 operates independently of the RPA processor 15 of the operation automation device 1, but it is necessary for the model generation device 4 to operate before the RPA processor 15 executes the scenario R1 and store the web element learning model in the model storage 17.

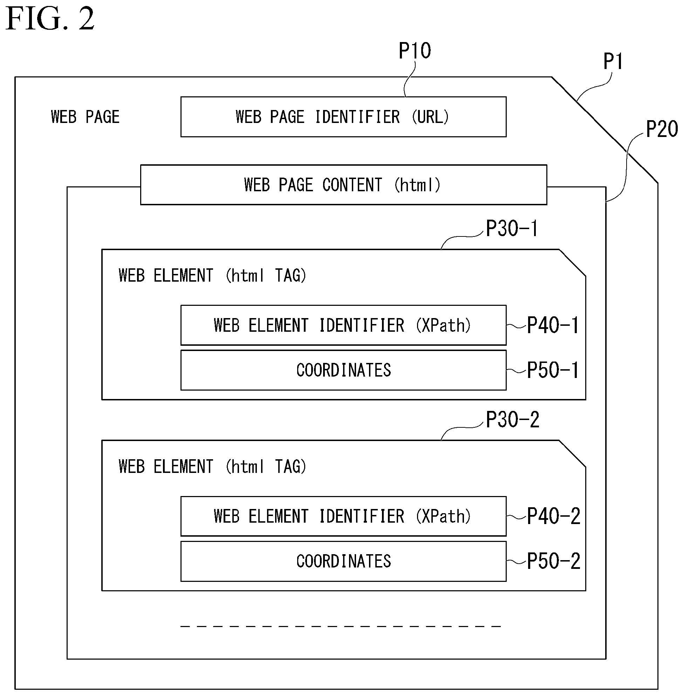

FIG. 2 is a configuration diagram of a model of the web page P1 for use in the present embodiment. The web page P1 of this model is configured to include a web page identifier P10 expressed by a URL and web page content P20 written in html. The web page content P20 has a plurality of web elements P30-1 to P30-N (N is an integer equal to or greater than 2). In FIG. 2, an example in which N = 2 is shown. A web element P30-n (n is an integer between 1 and N) includes html tags (a, div, p, and the like) and includes a web element identifier P40-n described in the XPath and coordinates P50-n indicating a display position of the web element P30-n when it is displayed in a web browser. In addition, the a tag designates a starting point of a link or the like, the div tag indicates a separator, and the p tag indicates a paragraph.

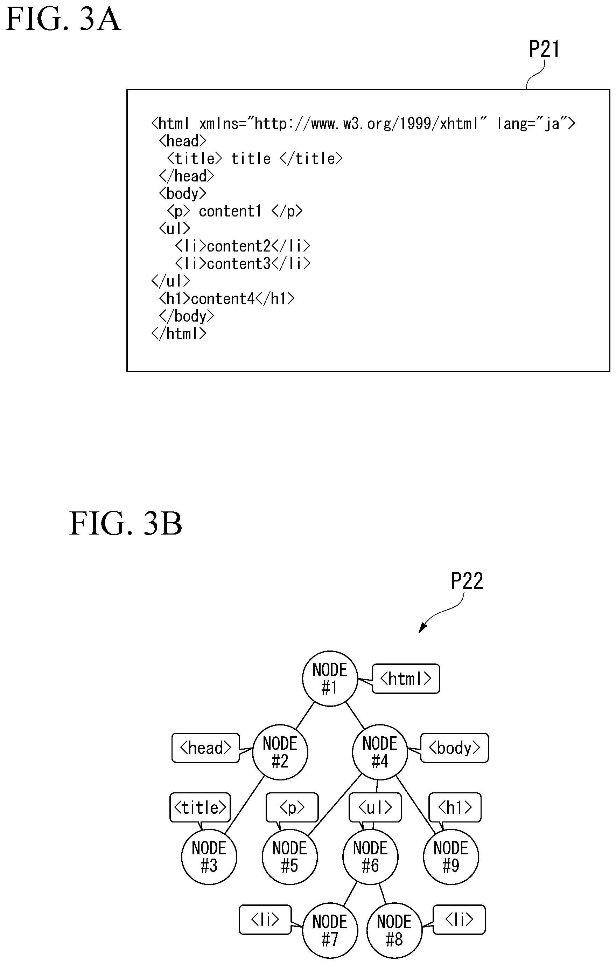

FIGS. 3A and 3B are diagrams showing an example of an html representation P21 and a syntax tree representation P22 of the web page content P20 shown in FIG. 2. The web page content P20 of the web page P1 acquired by the RPA processor 15 or the model generation device 4 of FIG. 1 is in the format of the html representation P21 as shown in FIG. 3A, but the RPA processor 15 and the model generation device 4 of the present embodiment perform interconversion with the format of the syntax tree representation P22 shown in FIG. 3B, as necessary. A corresponding tag in the html representation P21 shown in FIG. 3A is added to each node of the syntax tree representation P22 shown in FIG. 3B for description. Although the node number in the syntax tree representation P22 is assigned at the time of conversion from the html representation P21 into the syntax tree representation P22, a preorder traversal method is used for assigning node numbers in the present embodiment. Hereinafter, a node with a node number n is referred to as node #n. Each node in the syntax tree representation P22 includes all information of a portion corresponding to that node in the html representation P21 and reconversion from the syntax tree representation P22 into the html representation P21 is possible. For example, information that can be converted into a corresponding portion '<html xmlns="http://www.w3.org/1999/xhtml'' lang="ja">' in the html representation P21 is added to node #1 of the syntax tree representation P22. During this conversion, the RPA processor 15 and the model generation device 4 also perform a process of facilitating correspondence between the html representation P21 and the syntax tree representation P22 by embedding node numbers as comment attributes in the tags of web elements in the html representation P21.

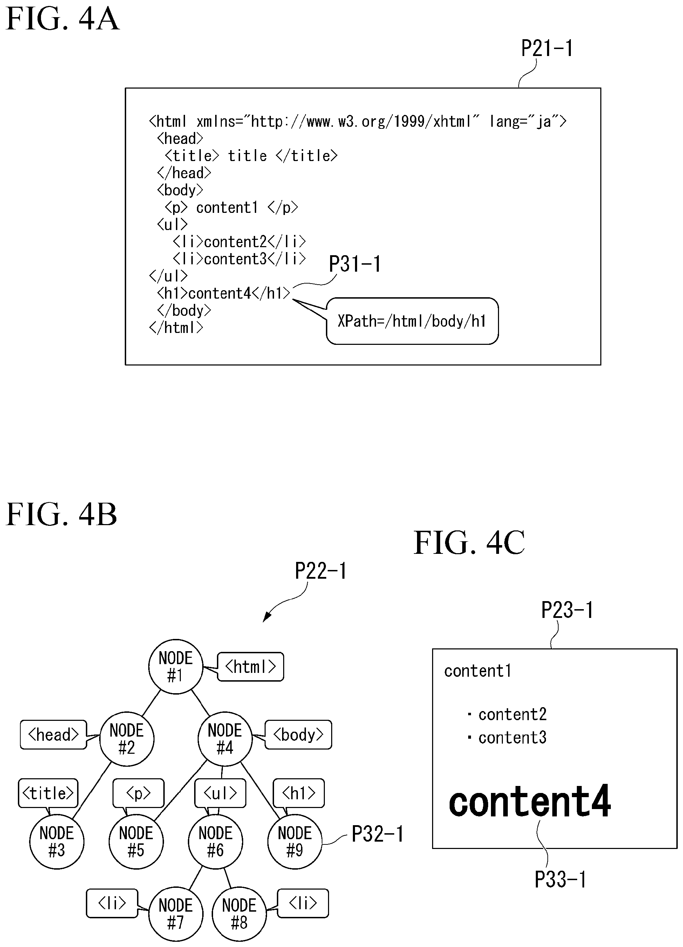

Using FIGS. 4A to 6C, an example of changes in the web page content representation shown in FIGS. 3A and 3B and changes in a display of the web browser when the web page content is updated will be described.

FIGS. 4A and 4B are diagrams showing a web page content representation before the web page is updated and a display of the web browser. FIG. 4A shows a html representation P21-1 of web page content P20 before the web page is updated, FIG. 4B shows a syntax tree representation P22-1 of the html representation P21-1 shown in FIG. 4A, and FIG. 4C shows a display P23-1 of the web page content P20 before the web page is updated in the web browser. An XPath of the operation target web element P31-1 in the html representation P21-1 of FIG. 4A is '/html/body/h1.' In the syntax tree representation P22-1 in FIG. 4B, the operation target web element P31-1 corresponds to the web element P32-1 of node #9. Moreover, the operation target web elements P31-1 and P32-1 are displayed like the operation target web element P33-1 in a display P23-1 of the web browser shown in FIG. 4C.

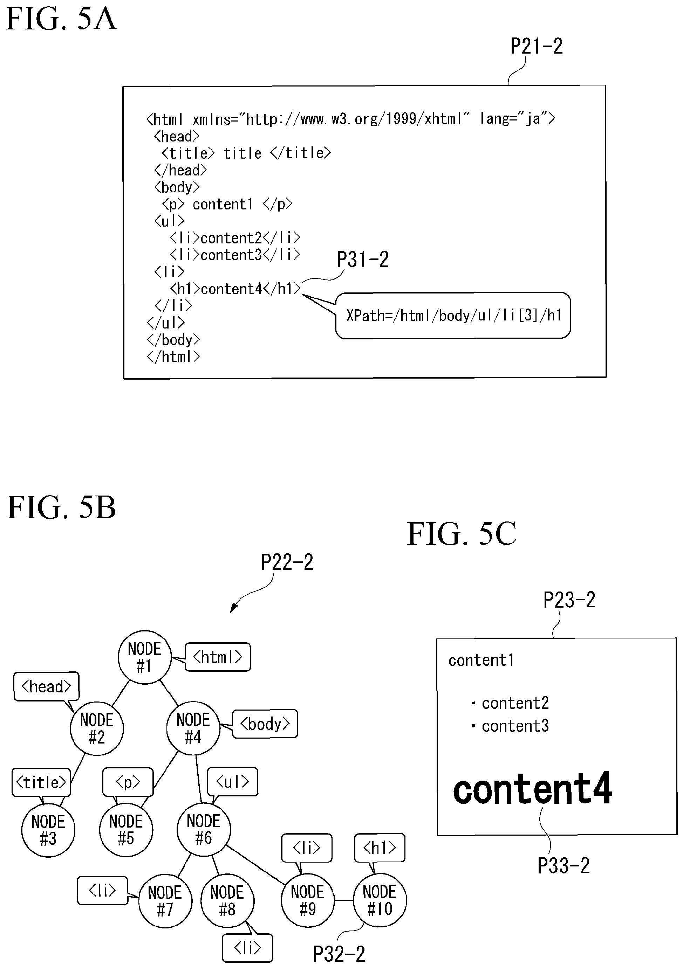

FIGS. 5A to 5C show a web page content representation after a web page is updated and a display of the web browser. FIG. 5A shows an html representation P21-2 after the web page of the html representation P21-1 of FIG. 4A is updated. FIG. 5B shows syntax tree representation P22-2 of html representation P21-2 shown in FIG. 5A. FIG. 5C shows a display P23-2 of web page content P20 after the web page is updated in the web browser.

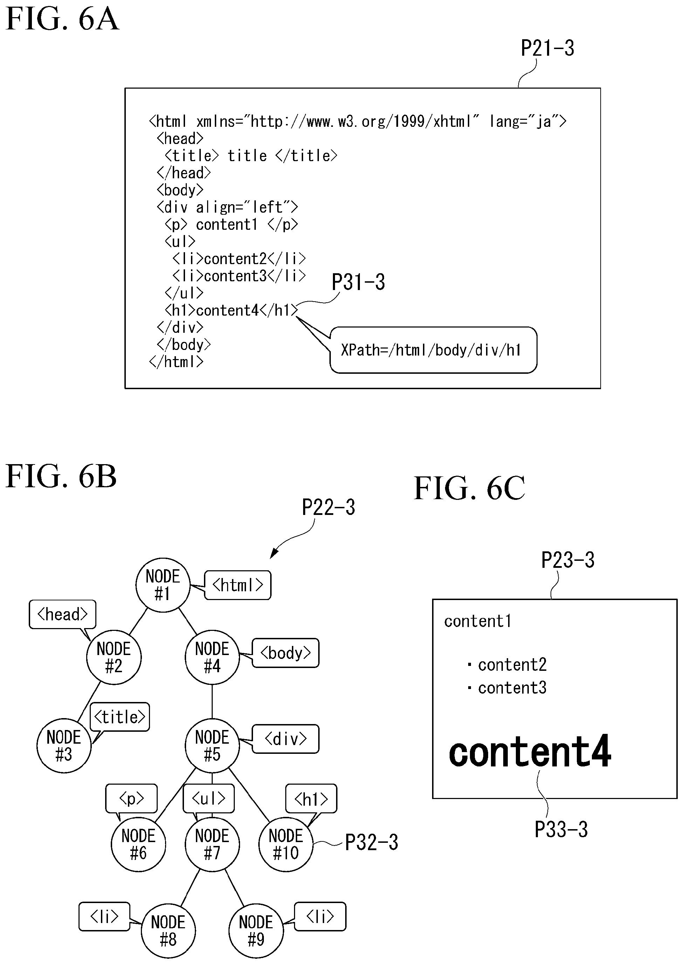

FIGS. 6A to 6C show a web page content representation after a web page is updated different from that in FIGS. 5A to 5C and a display of the web browser. FIG. 6A shows an html representation P21-3 after the web page of the html representation P21-1 of FIG. 4A is updated. FIG. 6B shows a syntax tree representation P22-3 of the html representation P21-3 shown in FIG. 6A. FIG. 6C shows a display P23-3 of the web page content P20 after the web page is updated in the web browser.

The operation target web element P31-1 in FIG. 4A is an operation target web element P31-2 in the html representation P21-2 of FIG. 5A and the XPath is changed to '/html/body/ul/li[3]/h1.' Moreover, the operation target web element P31-1 in FIG. 4A is the operation target web element P31-3 in the html representation P21-3 of FIG. 6A and the XPath is changed to '/html/body/div/h1.'

Although the operation target web element P32-1 is node #9 in the syntax tree representation P22-1 shown in FIG. 4B, the operation target has moved to the web element P32-2 of node #10 in the syntax tree representation P22-2 shown in FIG. 5B and the operation target has moved to the web element P32-3 of node #10 in the syntax tree representation P22-3 shown in FIG. 6B.

On the other hand, the web browser display P23-1 shown in FIG. 4C is substantially identical to the web browser display P23-2 shown in FIG. 5C or the web browser display P23-3 shown in FIG. 6C and it can be seen that it is difficult for the user to know that the web page content has been updated. Although the XPath of the operation target web element P31-1 before the update is '/html/body/h1' and the XPaths of the operation target web elements P31-2 and P31-3 after the update are '/html/body/h1' and '/html/body/div/h1,' respectively, it is difficult to know this change using a simple algorithm.

The main purpose of the present embodiment is to discover that the operation target web elements P31-1, P32-1, and P33-1 in the respective representations before the web page modification shown in FIG. 4A to 4C have moved to the operation target web elements P31-2, P32-2, and P33-2 after the web page modification shown in FIGS. 5A to 5C or the operation target web elements P31-3, P32-3, and P33-3 shown in FIGS. 6A to 6C and to acquire the XPath of the operation target web element P31-2 or the XPath of the operation target web element P31-3.

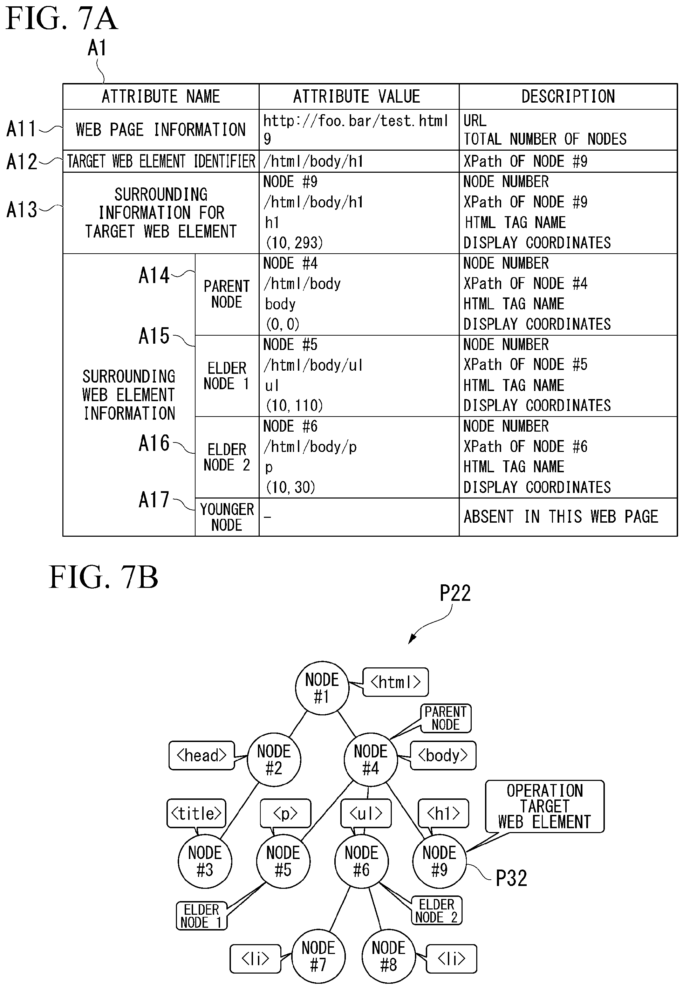

FIGS. 7A and 7B are diagrams showing an example of analysis information used by the RPA processor 15 and the model generation device 4. FIG. 7A shows an example of analysis information A1 and FIG. 7B shows a syntax tree representation P22 of the web page content P20 from which the analysis information A1 shown in FIG. 7A has been obtained. The syntax tree representation P22 and the operation target web element P32 shown in FIG. 7B correspond to the syntax tree representation P22-1 and the operation target web element P32-1 shown in FIG. 4B.

As shown in FIGS. 4A to 6C, even if a change in the web page content P20 is minor, the XPath of the web element changes irregularly and it is difficult to obtain the XPath after the change. However, when the syntax tree representation P22-1 of the web page content P20 shown in FIG. 4B is compared with the syntax tree representation P22-3 shown in FIG. 6B, it is found that the syntax tree representation around the operation target web element P32-1 is substantially identical to the syntax tree representation around the operation target web element P32-3, and using this as a clue, it may be possible to determine that the operation target web element P32-3 is a moved version of the operation target web element P32-1 before the update. However, when the syntax tree representation P22-1 of the web page content P20 shown in FIG. 4B is compared with the syntax tree representation P22-2 shown in FIG. 5B, the syntax tree representation around the operation target web element P32-1 and the syntax tree representation around the operation target web element P32-2 are similar but not identical and it is difficult to determine that the web element P32-2 is a moved version of the web element P32-1 in a simple comparison process.

Therefore, in the present embodiment, not only the operation target web element but also surrounding information on the syntax tree is collected and the similarity of the syntax trees is comprehensively determined using machine learning techniques. Thus, it is necessary to convert the syntax tree around the operation target web element into a format in which machine learning is easy. In the present embodiment, this is referred to as analysis information. The RPA processor 15 creates analysis information A1 for the designated web element based on the syntax tree representation P22 of the web page content P20, as exemplified in FIG. 7A. The target web element for which the analysis information A1 is generated is referred to as a target web element.

The analysis information A1 shown in FIG. 7A includes information about the entire web page P1, information about the target web element, and information about surrounding web elements. The surrounding web elements are web elements adjacent to the target web element on the syntax tree.

The web page information A11 is an example of information about the entire web page P1. The web page information A11 includes, for example, a URL of the web page P1 and the total number of nodes included in the syntax tree representation P22 of the web page content P20.

A target web element identifier A12 and surrounding information A13 for a target web element are information about the target web element. The target web element identifier A12 is information for identifying the target web element and is indicated by an XPath. The XPath is obtained from a web element identifier P40 of the web page P1. The surrounding information A13 for the target web element indicates content around the target web element in the web page P1. The surrounding information A13 for the target web element includes a node number, an XPath, an HTML tag name, and display coordinate information of the target web element. The node number is obtained from the syntax tree representation P22, the XPath is obtained from the web element identifier P40 of the web page P1, the HTML tag name is obtained from the web element P30 of the web page P1, and the display coordinate information is obtained from coordinates P50 of the web page P1.

The surrounding web element information indicates the content around the surrounding web element on the web page P1. The surrounding web elements are, for example, parent, elder, and younger web elements of the target web element. As shown in FIG. 7B, when the target web element is node #9, the parent node is node #4, which is one level higher, and the elder nodes are nodes #5 and #6, which have the same parent node as the target web element and have node numbers smaller than the node number of the target web element. In addition, the younger node is a node whose parent node is the same as the node of the target web element and whose node number is greater than the node number of the target web element. However, in FIG. 7B, there is no younger node of the target web element. A web element corresponding to the parent node is a parent web element, a web element corresponding to the elder node is an elder web element, and a web element corresponding to the younger node is a younger web element.

The surrounding web element information shown in FIG. 7A includes surrounding web element information A14 for a parent node, surrounding web element information A15 for elder node 1, surrounding web element information A16 for elder node 2, and surrounding web element information A17 for a younger node. The surrounding web element information A14 for the parent node includes a node number, an XPath, an HTML tag name, and display coordinate information of a parent web element, while the surrounding web element information A15 for elder node 1 and the surrounding web element information A16 for elder node 2 include node numbers, XPaths, HTML tag names, and display coordinate information of the web element of the first elder and the web element of the second elder. In the surrounding web element information A17 for the younger node, it is set that the younger web element is absent on its web page. However, when the younger web element is present, the node number, an XPath, an HTML tag name, and display coordinate information of the younger web element are set. Like the surrounding information for the target web element, the node number of the surrounding web element is obtained from the syntax tree representation P22, the XPath of the surrounding web element is obtained from the web element identifier P40 of the web page P1, the HTML tag name is obtained from the web element P30 of the web page, and the display coordinate information is obtained from the coordinates P50 of the web page P1.

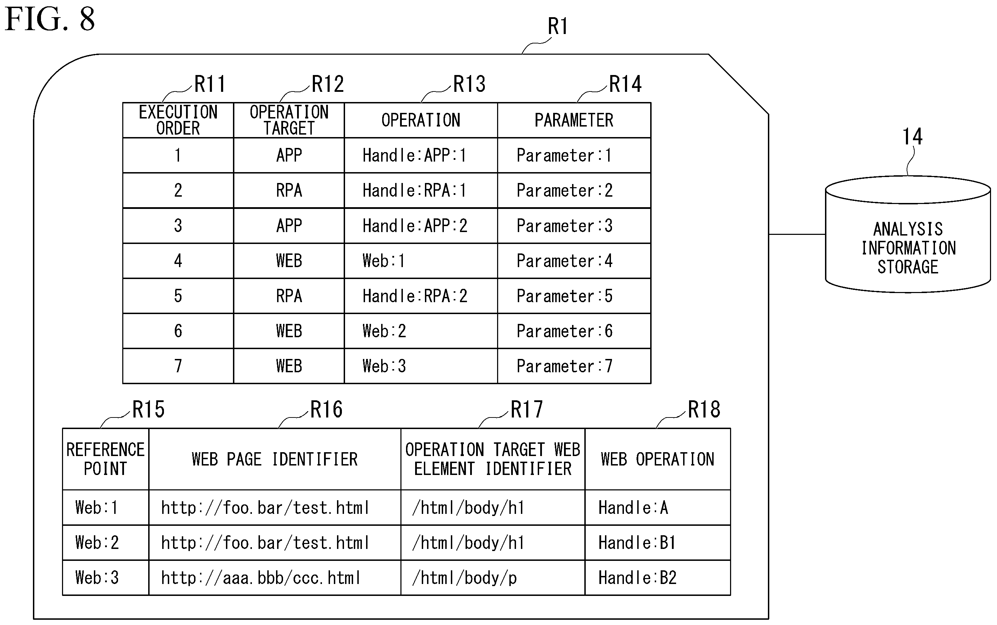

FIG. 8 is a diagram showing an example of the scenario R1. The scenario R1 includes a plurality of records. Each record stores an execution order R11, an operation target R12, an operation R13, and a parameter R14 when the operation is performed. The operation target R12 is, for example, an application (APP), an RPA, a web browser (WEB), or the like. It is possible to uniquely determine whether or not the operation target is a web browser with reference to the operation target R12. This scenario R1 is linked to the analysis information A1 included in the analysis information DB of the analysis information storage 14. The analysis information A1 is used to estimate an XPath of a movement destination if the operation target R12 is a web browser and a description location of the operation target web element on the html syntax moves from the time when the scenario is created at the time of execution of the scenario.

When the operation target R12 indicates a web browser (WEB), a reference point R15 of the web operation information is set for the operation R13. A web page identifier R16, an operation target web element identifier R17, and a web operation R18 are set in the web operation information in association with the reference point R15. The reference point R15 is a primary key. The web page identifier R16 is information for identifying the operation target web page P1, and is described by, for example, a URL. The operation target web element identifier R17 is used to identify an operation target web element among the web elements within the web page P1 identified by the web page identifier R16. An XPath of the operation target web element is set in the operation target web element identifier R17. The web operation R18 is an operation to be performed on the operation target web element identified by the web page identifier R16 and the operation target web element identifier R17. In addition, the web page identifier R16, the operation target web element identifier R17, and the web operation R18 may be set in the operation R13 of the scenario R1.

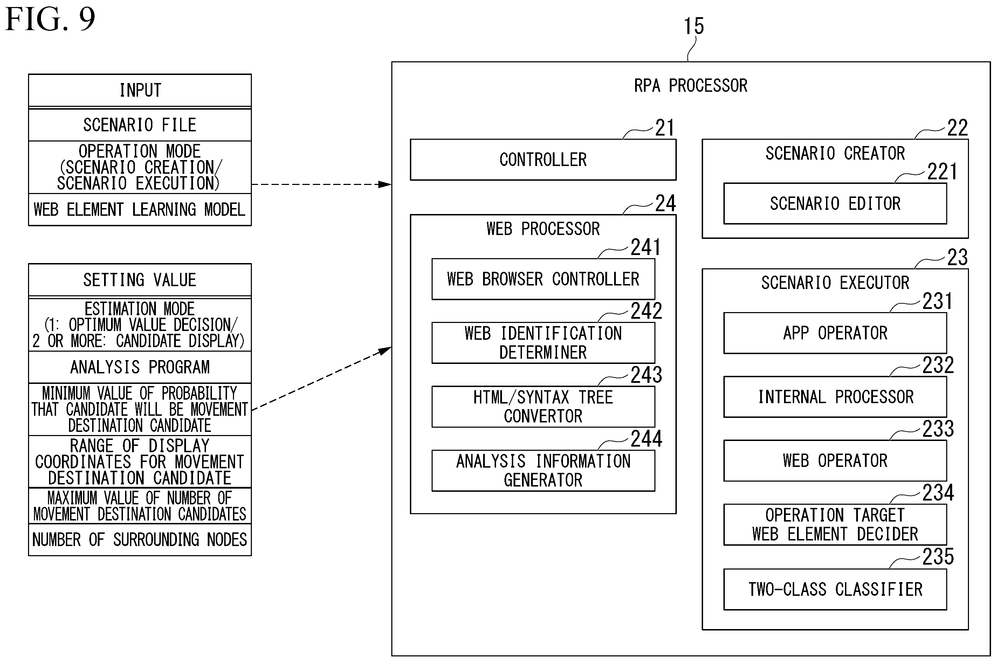

FIG. 9 is a diagram showing an example of a configuration of the RPA processor 15, which is a core of the present embodiment. The RPA processor 15 operates based on an input scenario file. The scenario file is a file that includes the scenario R1. Whether the RPA processor 15 creates or executes a scenario file during operation depends on an input operation mode. The operation mode is input by, for example, the input 11. Moreover, a web element learning model read from the model storage 17 is input to the RPA processor 15. Furthermore, various types of setting values are input to the RPA processor 15. Each setting value may be input by the input 11, or the RPA processor 15 may read these setting values stored in advance in a setting value storage, a recording medium, or an external device (not shown). Each setting value will be described below.

The RPA processor 15 is configured to include a controller 21, a scenario creator 22, a scenario executor 23, and a web processor 24. The controller 21 controls the entire RPA processor 15. The scenario creator 22 performs a process in a scenario creation mode. The scenario executor 23 performs a process in a scenario execution mode. The web processor 24 performs a web-related process.

The scenario creator 22 has a scenario editor 221. The scenario editor 221 creates or edits a scenario file in accordance with information input by the user through the input 11. When an operation for an operation target web element is set in the scenario R1 being edited, the scenario editor 221 instructs the web processor 24 to generate analysis information for the operation target web element. The scenario editor 221 writes a scenario file in which the edited scenario R1 is set to the scenario storage 13 and writes the analysis information generated by the web processor 24 to the analysis information DB of the analysis information storage 14 in association with the scenario file.

The scenario executor 23 includes an APP operator 231, an internal processor 232, a web operator 233, an operation target web element decider 234, and a two-class classifier 235. When an operation target R12 indicating an external application is set in a record of the scenario R1 within the input scenario file, the APP operator 231 performs a process of the external application using the setting content of an operation R13 and a parameter R14 of the record. When the operation target R12 indicating the RPA is set in the record of the scenario R1 in the input scenario file, the internal processor 232 performs a process of the RPA using the setting content of the operation R13 and the parameter R14 of the record. When the operation target R12 indicating the web browser is set in the record of the scenario R1 within the input scenario file, the web operator 233 performs a process of the web browser using the web operation information of the reference point R15 indicated by the operation R13 of that record and the setting content of the parameter R14.

When an operation target web element is moved at the time of scenario execution, the operation target web element decider 234 estimates and decides the XPath of the movement destination. In addition to information about the web page that is the target of scenario execution, setting values of an estimation mode, an analysis program to be sent to the web browser 16, a minimum value of a probability for setting as a movement destination candidate of an operation target web element, a range of display coordinates for setting as a movement destination candidate of the operation target web element, and a maximum value of the number of movement destination candidates for the operation target web element are used in the operation of the operation target web element decider 234. In addition, the estimation mode value "1" indicates that one movement destination web element is decided and a value of 2 or more indicates the number of movement destination web element candidates. The operation target web element decider 234 selects at least some of the web elements included in the changed web page P1 as candidates for a movement destination of the operation target web element, and instructs the web processor 24 to generate analysis information for the web elements of the candidates for the movement destination to be used for narrowing down the number of selected candidates.

The two-class classifier 235 calculates a probability that the candidate for the movement destination of the operation target web element selected by the operation target web element decider 234 will be a movement destination of the operation target web element using the input web element learning model, the analysis information of the operation target web element, and the analysis information of the candidates for the movement destination of the operation target web element. The operation target web element decider 234 selects a movement destination of the operation target web element or a candidate presented for a user to select the movement destination of the operation target web element from among the candidates for the operation target web element of the movement destination based on the calculated probability.

The web processor 24 is called from both the scenario creator 22 and the scenario executor 23. The web processor 24 includes a web browser controller 241, a web identification determiner 242, an HTML/syntax tree convertor 243, and an analysis information generator 244. The web browser controller 241 operates the web browser and the extended function provided by the web browser 16. The web identification determiner 242 determines whether or not there is a web element having a web element identifier designated in the web page P1 read from the web browser. The HTML/syntax tree convertor 243 bidirectionally converts the html representation P21 and the syntax tree representation P22 of the acquired web page content P20. The analysis information generator 244 analyzes the web page content P20 and generates analysis information. In addition to information about a web page serving as a target of scenario creation or execution, a setting value for the number of target surrounding nodes for generating surrounding web element information is used in an operation of the analysis information generator 244.

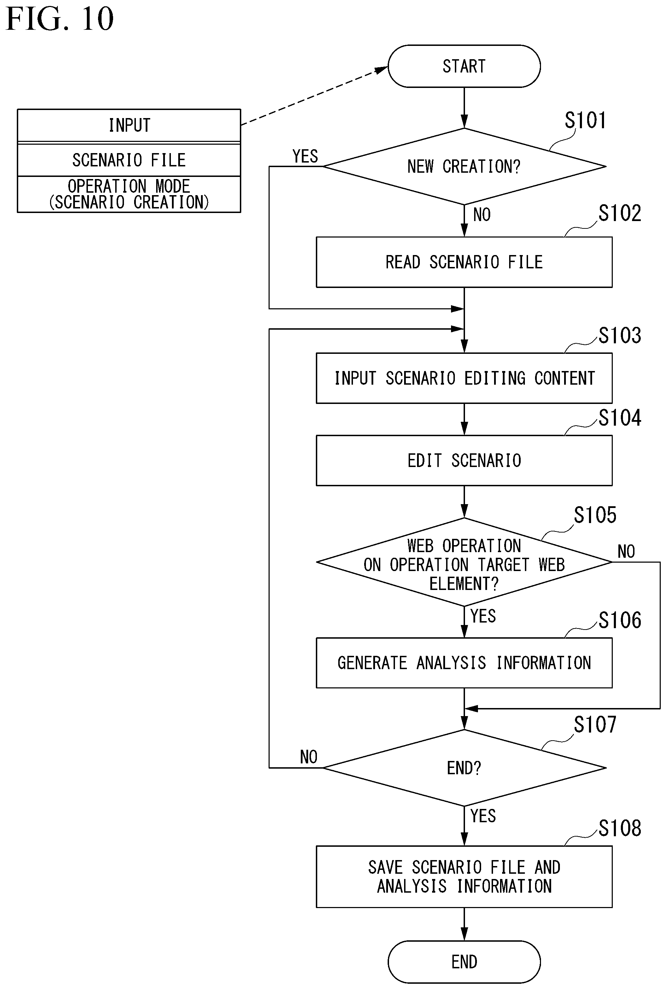

A process of the operation automation device 1 will be described. FIG. 10 is a flowchart showing an example of a scenario editing process in the operation automation device 1. Error processing is omitted in FIG. 10. When the input operation mode is the scenario creation mode, the controller 21 controls the RPA processor 15 so that the editing process shown in FIG. 10 is executed.

When the user has input the creation of a new scenario (step S101: YES), the scenario editor 221 of the scenario creator 22 generates a new scenario file. On the other hand, when the user inputs information for identifying the scenario file to be edited (step S101: NO), the scenario editor 221 reads the scenario file to be edited from the scenario storage 13 (step S102).

When the user inputs the editing content of the scenario through the input 11 (step S103), the scenario editor 221 edits the scenario R1 in accordance with the input editing content (step S104). When the web operation information for performing a web operation on the operation target web element has been edited (step S105), the scenario editor 221 notifies the web processor 24 of the URL of the web page indicated by the web page identifier R16 of the web operation information and the XPath indicated by the operation target web element identifier R17 and instructs the web processor 24 to generate analysis information. The web processor 24 generates analysis information A1 based on the instruction (step S106).

The scenario editor 221 iterates a process from step S103 until the user inputs an end command through the input 11 (step S107). When the user inputs the end command through the input 11, the scenario editor 221 saves the scenario file in which the edited scenario R1 is set in the scenario storage 13 and saves the analysis information generated in step S106 in the analysis information DB of the analysis information storage 14 in association with the saved scenario file (step S108).

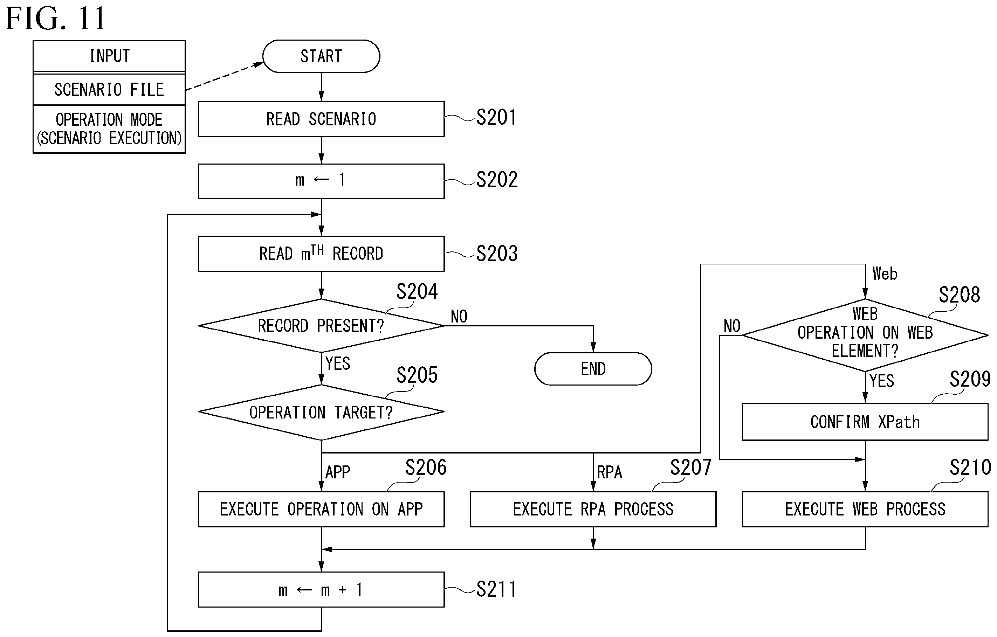

FIG. 11 is a flowchart showing an example of a scenario execution process in the operation automation device 1. Error processing is omitted in FIG. 11. When the input operation mode is the scenario execution mode, the controller 21 controls the RPA processor 15 so that the editing process shown in FIG. 11 is executed.

The controller 21 reads a scenario file designated as the execution target from the scenario storage 13 and acquires a scenario R1 (step S201). The controller 21 sets an initial value 1 as a variable m (step S202).

The controller 21 reads a record in which the variable m is set in an execution order R11 from the scenario R1 (step S203). The record of the scenario R1 in which the variable m is set in the execution order R11 is referred to as record m. The controller 21 determines whether or not the read record m is present (step S204). When it is determined that the read record m is present (step S204: YES), the controller 21 determines an operation target R12 of record m (step S205).

When it is determined that the operation target R12 is an application (APP), the controller 21 instructs the APP operator 231 to execute the application (APP). The APP operator 231 refers to record m and executes an operation on the application indicated by the operation R13 using a parameter value set in parameter R14 (step S206).

When it is determined that the operation target R12 is RPA in step S203, the controller 21 instructs the internal processor 232 to execute the RPA. The internal processor 232 refers to record m and executes the operation indicated by operation R13 using the parameter value set in the parameter R14 (step S207).

When it is determined that the operation target R12 is a web browser (WEB) in step S203, the controller 21 instructs the web operator 233 to execute the web browser (WEB). The web operator 233 reads web operation information corresponding to the reference point R15 indicated by the operation R13 of record m. The web operator 233 determines whether or not the read web operation information is about a web operation on the operation target web element identified by the XPath (step S208).

When it is determined that the read web operation information is about a web operation on the operation target web element (step S208: YES), the web operator 233 confirms the XPath of the operation target web element (step S209). That is, the web operator 233 notifies the operation target web element decider 234 of the web page identifier R16 and the operation target web element identifier R17 of the web operation information as the URL of the operation target web page and the XPath of the operation target web element, and queries the XPath. When the operation target web element has not moved, the operation target web element decider 234 notifies the web operator 233 that the XPath has not changed. On the other hand, when the operation target web element has moved, the operation target web element decider 234 notifies the web operator 233 of the XPath of the movement destination of the operation target web element.

When it is determined that the read web operation information is not about a web operation on the operation target web element in step S208 (step S208: NO) or after the processing of step S209, the web operator 233 performs the web operation in accordance with the web operation information read in step S208 (step S210). However, when the XPath of the movement destination of the operation target web element has been received from the operation target web element decider 234 in step S209, the web operator 233 performs a web operation on the operation target web element identified by the XPath of the movement destination instead of the XPath described in the operation target web element identifier R17.

When the processing of step S206, S207, or S210 ends, the controller 21 adds 1 to the variable m (step S211). The controller 21 iterates the process from step S203. In step S206, the APP operator 231 may set a predetermined value as the variable m in accordance with a predetermined condition and execute the process from step S203. Likewise, in step S207, the internal processor 232 may set a predetermined value as the variable m in accordance with the predetermined condition and execute the process from step S203. Moreover, likewise, in step S210, the web operator 233 may set a predetermined value as the variable m in accordance with the predetermined condition and execute the process from step S203. Also, when it is determined that there is no record m read in step S204 (step S204: NO), the controller 21 ends the process of FIG. 11.

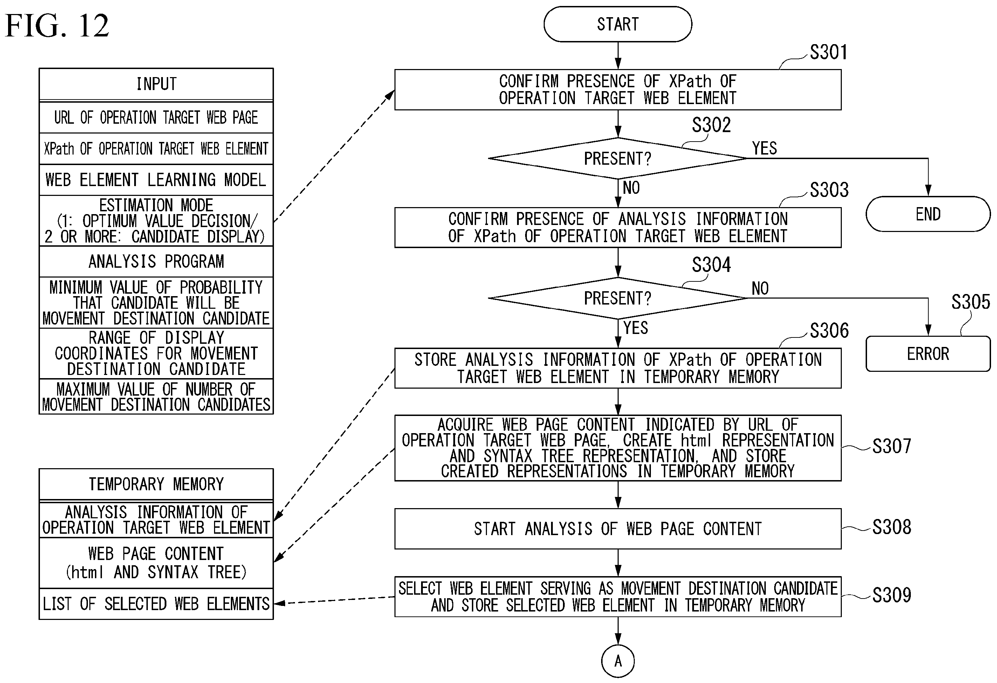

FIG. 12 is a flowchart showing an example of an operation of the operation target web element decider 234 shown in FIG. 9. The operation target web element decider 234 executes a process shown in FIG. 12 in step S209 of FIG. 11.

The operation target web element decider 234 inputs a URL of an operation target web page, an XPath of an operation target web element, a web element learning model, an estimation mode of a setting value, an analysis program, a minimum value of a probability that a candidate will be a movement destination candidate, a range of display coordinates of the movement destination candidate, and a maximum value of the number of movement destination candidates, and outputs the XPath of the movement destination of the operation target web element. Thereby, even if the web page P1 is updated and the operation target web element moves from the time of creation of the scenario, it is possible to perform an operation on a web element that is a movement destination of the operation target web element. The operation target web element decider 234 receives the URL of the operation target web page and the XPath of the operation target web element output by the web operator 233 in step S208 of FIG. 11.

The operation target web element decider 234 outputs the URL of the operation target web page and the XPath of the operation target web element to the web processor 24 and confirms the presence of the output XPath of the operation target web element (step S301). The web browser controller 241 acquires the web page P1 of the URL received from the operation target web element decider 234 with the web browser provided by the web browser 16. The web identification determiner 242 determines whether or not the web element of the XPath received from the operation target web element decider 234 is present in the web page content P20 of the web page P1 acquired by the web browser controller 241 and outputs a determination result to the operation target web element decider 234.

When a result of determining that the operation target web element is present is received from the web processor 24 (step S302: YES), the operation target web element decider 234 notifies the web operator 233 that the XPath has not been changed and ends the process.

On the other hand, when a result of determining that the operation target web element is absent is received from the web processor 24 (step S302: NO), the operation target web element decider 234 refers to the analysis information DB stored in the analysis information storage 14 and confirms whether or not analysis information of the web element identified by the URL of the operation target web page and the XPath of the operation target web element is present (step S303). When it is determined that analysis information is absent (step S304: NO), the operation target web element decider 234 outputs an error in a process of displaying an error on the display 12 or the like (step S305). For example, when there is no analysis information for the operation target web element because a scenario created in RPA that does not have the function of the present embodiment is being used or the like, an error will occur.

When it is determined that analysis information is present (step S304: YES), the operation target web element decider 234 reads analysis information A1 of the operation target web element confirmed in step S303 from the analysis information storage 14 and stores the analysis information A1 in a temporary memory (step S306).

The operation target web element decider 234 uses the web processor 24 to operate the web browser and the extended function and acquires the html representation P21 and the syntax tree representation P22 of the web page content P20 included in the web page P1 indicated by the URL of the operation target web page. In other words, the operation target web element decider 234 outputs the URL of the operation target web page to the web processor 24. The web browser controller 241 of the web processor 24 acquires the web page P1 indicated by the received URL using the web browser provided by the web browser 16. The HTML/syntax tree convertor 243 acquires the html representation P21 of the web page content P20 from the web page P1 acquired by the web browser controller 241, and converts the html representation P21 into a syntax tree representation P22. The HTML/syntax tree convertor 243 embeds a node number in the syntax tree representation P22 into the html representation P21. The operation target web element decider 234 stores the html representation P21 and the syntax tree representation P22 created by the HTML/syntax tree convertor 243 in a temporary memory (step S307).

The operation target web element decider 234 notifies the web processor 24 of the html representation P21 of the web page content P20, and issues an analysis instruction. The web browser controller 241 of the web processor 24 sends the html representation P21 of the web page content P20 and the analysis program to the web browser 16 and issues an instruction to start the analysis of the web page content P20 (step S308).

The web browser 16 executes an analysis program using the extended function of the web browser, selects a web element of a movement destination candidate from the web page content P20 described in the html representation P21, and stores a list of the selected movement destination candidate web elements in a temporary memory (step S309). There are two criteria for selecting candidates. The first criterion is that the candidates have the same tag as the operation target web element. The second criterion is that the display coordinates on the browser are included in the range of display coordinates for the movement destination candidate from the display coordinates of the operation target web element. The tag of the operation target web element and the display coordinates of the operation target web element are read from the analysis information A1 temporarily stored in step S306 by the operation target web element decider 234, the web browser controller 241, or the web browser 16. The web browser 16 stores the information of the selected movement destination candidate web element in association with the display coordinates and XPath information of the web element read from the html representation P21 of the web page content P20.

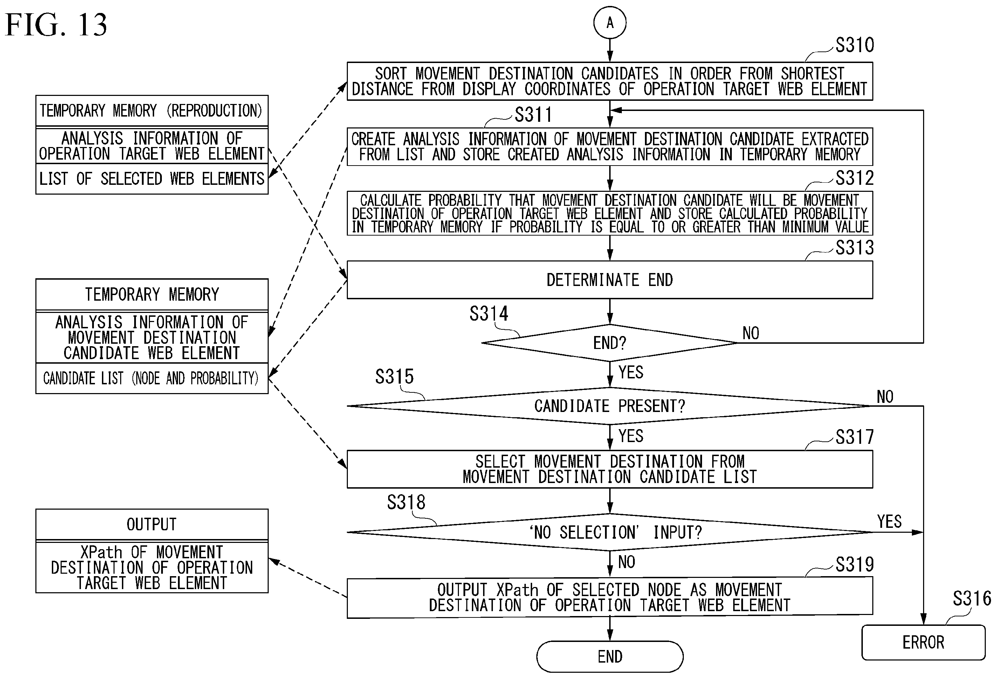

FIG. 13 is a flowchart showing a continuation of FIG. 12. The operation target web element decider 234 sorts a list of movement destination candidate web elements, selected in step S309, in order from the shortest distance from the display coordinates of the operation target web element (step S310). When the display coordinates are at an equivalent distance, the operation target web element decider 234 sorts the movement destination candidate web elements based on a distance from the operation target web element on the syntax tree representation.

When a web element of a highest-ranked movement destination candidate among movement destination candidates that have not been selected is extracted from the list of movement destination candidate web elements, the operation target web element decider 234 notifies the web processor 24 of a URL of the operation target web page and an XPath of its movement destination candidate web element and issues an instruction to generate analysis information for the extracted movement destination candidate web element. The operation target web element decider 234 stores analysis information A1 created by the analysis information generator 244 in a temporary memory (step S311).

The operation target web element decider 234 inputs the analysis information A1 of the operation target web element and the analysis information A1 of the movement destination candidate web element to the two-class classifier 235, and instructs the two-class classifier 235 to calculate a probability that the movement destination candidate will be the movement destination of the operation target web element. When the web element learning model is read from the model storage 17, the two-class classifier 235 inputs the analysis information A1 of the operation target web element and the analysis information A1 of the movement destination candidate web element to the web element learning model and returns the output probability to the operation target web element decider 234 (step S312). The operation target web element decider 234 discards a currently selected movement destination candidate if the probability is less than a minimum value of the probability for the movement destination candidate and the operation target web element decider 234 includes the node number of the currently selected movement destination candidate and the calculated probability in a candidate list and stores them in a temporary memory if the probability is equal to or greater than the minimum value (step S313).

The operation target web element decider 234 performs an end determination process (step S314). An end condition is that any of the following conditions is satisfied. The first end condition is that the number of movement destination candidates selected in step S313 reaches the maximum number of movement destination candidates. The second end condition is that all movement destination candidates included in the list of movement destination candidate web elements sorted in step S310 have been selected.

When it is determined that the end condition is not satisfied (step S314: NO), the operation target web element decider 234 iterates the process from step S311. When it is determined that the end condition is satisfied (step S314: YES), the operation target web element decider 234 determines whether or not the candidate list contains the movement destination candidate selected in step S312 (step S315). When it is determined that the candidate list does not contain the movement destination candidate (step S315: NO), the operation target web element decider 234 outputs an error in displaying an error on the display 12 or the like (step S316).

When it is determined that the candidate list contains movement destination candidate web elements (step S315: YES), the operation target web element decider 234 sorts the movement destination candidate web elements in descending order of the probability calculated in step S312. When a maximum value of the number of movement destination candidates in the setting value is 1, the operation target web element decider 234 selects a movement destination candidate web element with a highest probability as the movement destination web element. On the other hand, when the maximum number of movement destination candidates is 2 or more, the operation target web element decider 234 displays movement destination candidate web elements on the display 12 in the number designated by the maximum value, starting from the one with the highest probability. The user inputs information about the movement destination web element selected from the displayed movement destination candidate web elements through the input 11 (step S317). In addition, if there is no suitable one, the user inputs "no selection" through the input 11.

The operation target web element decider 234 determines whether or not 'no selection' has been input (step S318). When it is determined that 'no selection' has been input (step S318: YES), the operation target web element decider 234 outputs an error in displaying an error on the display 12 or the like and ends the process (step S316). When it is determined that 'no selection' has not been input (step S318: NO), the operation target web element decider 234 reads the XPath of the web element selected in step S317 from the analysis information A1 generated in step S311. The operation target web element decider 234 outputs the read XPath as the movement destination XPath of the operation target web element to the web operator 233 (step S319).

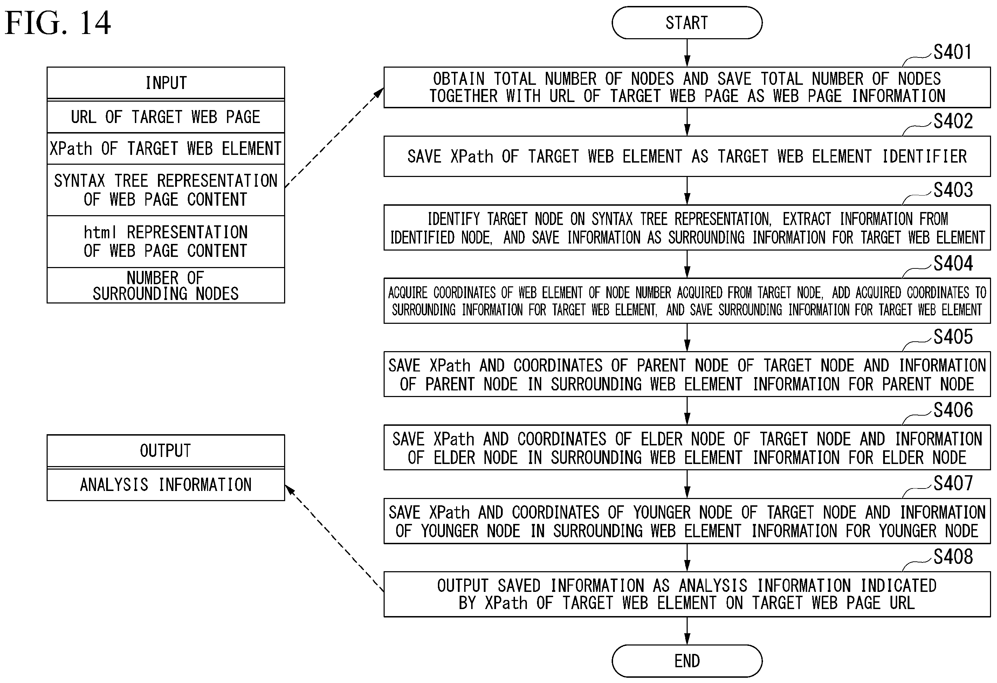

FIG. 14 is a flowchart showing an example of an operation of the analysis information generator 244 shown in FIG. 9. In the scenario creation mode, the analysis information generator 244 is called when the scenario editor 221 describes an operation targeting a web element in the scenario. The analysis information generator 244 generates analysis information A1 about the operation target web element described in the scenario. The generated analysis information A1 is stored in the analysis information DB stored in the analysis information storage 14 in association with the scenario. In the scenario execution mode, the analysis information generator 244 is called to detect the movement destination of the web element when the operation target web element decider 234 determines that the XPath of the operation target web element described in the scenario R1 is absent in the operation target web page. The operation target web element decider 234 generates analysis information A1 about the web element that is a movement destination candidate of the operation target web element. The analysis information generator 244 inputs the URL of the target web page, the XPath of the target web element, the syntax tree representation of the web page content, the html representation of the web page content with the node number embedded, and the number of surrounding nodes of the setting value, and outputs the analysis information A1.

The web processor 24 receives the URL of the web page and the XPath of the operation target web element from the scenario editor 221 in step S106 of FIG. 10. Alternatively, the web processor 24 receives the URL of the web page and the XPath of the web element of the movement destination candidate from the web processor 24 in step S311 of FIG. 13. The web browser controller 241 reads the web page P1 corresponding to the received URL with the web browser provided by the web browser 16. The HTML/syntax tree convertor 243 converts the acquired html representation P21 of web page content P20 into a syntax tree representation P22 and embeds a node number in the html representation P21.

The analysis information generator 244 inputs the URL of the web page and the XPath of the operation target web element output from the scenario editor 221 or the URL of the web page and the XPath of the movement destination candidate web element output from the web processor 24 as the URL of the target web page and the XPath of the target web element. Moreover, the analysis information generator 244 inputs the syntax tree representation P22 and the html representation P21 generated by the HTML/syntax tree convertor 243. Moreover, the analysis information generator 244 reads the number of surrounding nodes of the setting value.

The analysis information generator 244 scans the entire syntax tree representation P22 of the web page content P20 to obtain the total number of nodes and saves the total number of nodes together with the input URL of the web page as web page information A11 (step S401). Furthermore, the analysis information generator 244 saves the input XPath of the target web element as the target web element identifier A12 (step S402).

The analysis information generator 244 uses the input XPath of the target web element to identify a target node that is a node of the target web element in the syntax tree representation P22 of the web page content P20. The analysis information generator 244 extracts information of the target node and saves the information as surrounding information A13 for the target web element (step S403). Specifically, the analysis information generator 244 refers to the syntax tree representation P22 of the web page content P20, acquires a node number from the target node corresponding to the target web element, and saves the surrounding information A13 for the target web element in which the acquired node number and the XPath of the target web element are set.

The analysis information generator 244 inputs the node number acquired in step S403 and the input html representation P21 of the web page content P20 to the web browser controller 241. The web browser controller 241 acquires the html tag name and display coordinates of the web element identified by the input node number from the input html representation P21 and returns the html tag name and the display coordinates of the web element. The analysis information generator 244 adds the html tag name and coordinates of the target web element returned from the web browser controller 241 to the surrounding information A13 for the target web element to save the surrounding information A13 for the target web element (step S404).

The analysis information generator 244 refers to the syntax tree representation P22 of the web page content P20 and acquires the node number from the parent node of the target node. The analysis information generator 244 inputs the acquired node number of the parent node and the html representation P21 of the web page content P20 to the web browser controller 241. The web browser controller 241 acquires the XPath, html tag name, and coordinates of the parent web element identified by the input node number from the input html representation P21 to return the XPath, html tag name, and coordinates of the parent web element. The analysis information generator 244 saves surrounding web element information A14 for the parent node in which the node number of the parent node and the XPath, html tag name, and coordinates of the parent web element returned from the web browser controller 241 are set (step S405).

The analysis information generator 244 refers to the syntax tree representation P22 of the web page content P20 and acquires node numbers from the elder nodes of the target node. The analysis information generator 244 performs a process equivalent to that of the parent node in step S405 for each of the acquired elder nodes and saves the surrounding web element information A15 and A16 for the elder nodes in which the node numbers of the elder nodes and the XPaths, html tag names, and coordinates of the elder web elements are set (step S406).

The analysis information generator 244 refers to the syntax tree representation P22 of the web page content P20 and acquires the node number from the younger node of the target node. The analysis information generator 244 performs a process equivalent to that of the parent node in step S405 for the acquired younger node and saves the surrounding web element information A17 for the younger node in which the node number of the younger node and the XPath, html tag name, and coordinates of the younger web element are set (step S407).

The analysis information generator 244 outputs the analysis information A1 in which the web page information A11, the target web element identifier A12, the surrounding information A13 for the target web element, the surrounding web element information A14 for the parent node, the surrounding web element information A15 and A16 for the elder nodes, and the surrounding web element information A17 for the younger node that are saved are set, to the scenario editor 221 or the operation target web element decider 234 that is a calling source.

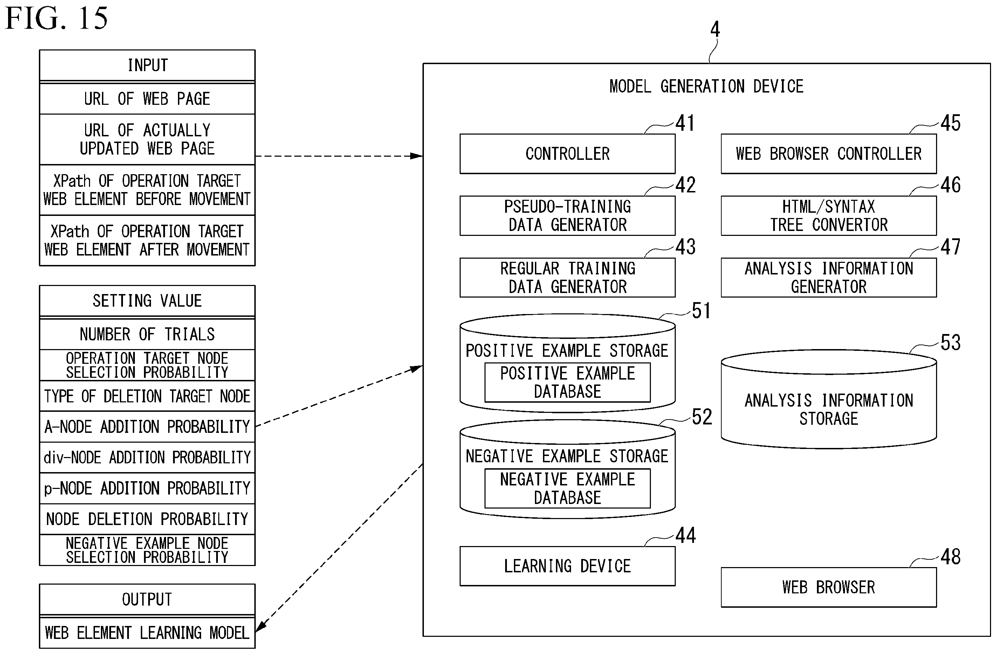

FIG. 15 is a diagram showing an example of a configuration of the model generation device 4 shown in FIG. 1. The model generation device 4 is configured to include a controller 41, a pseudo-training data generator 42, a regular training data generator 43, a learning device 44, a web browser controller 45, an HTML/syntax tree convertor 46, an analysis information generator 47, a web browser 48, a positive example storage 51, a negative example storage 52, and an analysis information storage 53. The model generation device 4 inputs a URL of a web page, a URL of an actually updated web page, an XPath of an operation target web element before the web page is moved due to the update, an XPath of an operation target web element after the web page is moved due to the update, and various types of setting values, and outputs a web element learning model. The input data and each setting value may be input by an input (not shown) or the model generation device 4 may read them from a storage, a recording medium, or an external device (not shown). Each setting value will be described below.

The model generation device 4 operates independently of the RPA processor 15 of the operation automation device 1 and generates a web element learning model. The web element learning model is used when the operation target web element decider 234 of the operation automation device 1 uses the two-class classifier 235 in the scenario execution mode to calculate a probability that a movement destination candidate web element will be an actual movement destination. It is assumed that a web element learning model is generated using the model generation device 4 during a sufficient amount of time during the development of the RPA to be executed by the RPA processor 15 of the operation automation device 1 and that the generated web element learning model is distributed at the same time as a developed RPA program. The model generation device 4 analyzes actually updated web pages to generate learning data. However, because it is expected that sufficient learning data cannot be obtained by this alone, a function of generating more learning data by generating updated web pages from non-updated web pages in a pseudo manner is also provided.

The controller 41 controls the entire model generation device 4. The pseudo-training data generator 42 performs the addition, movement, or deletion of a web element to or from the web page according to a predetermined probability to generate an updated web page in a pseudo manner. The pseudo-training data generator 42 stores a set of analysis information in which a movement source web element and a movement destination web element in the updated web page are correctly reflected in a positive example database of the positive example storage 51 and stores a set of analysis information in which a movement source web element and a movement destination web element in the updated web page are not correctly reflected in a negative example database of the negative example storage 52. The regular training data generator 43 stores the set of analysis information in which the movement source web element and the movement destination web element in the actual updated web page are reflected in the positive example database of the positive example storage 51. The learning device 44 trains a web element learning model using the set of analysis information stored in the positive example database of the positive example storage 51 and the set of analysis information stored in the negative example database of the negative example storage 52.

The web browser controller 45, the HTML/syntax tree convertor 46, the analysis information generator 47, the web browser 48, and the analysis information storage 53 have functions similar to those of the web browser controller 241, the HTML/syntax tree convertor 243, the analysis information generator 244, the web browser 16, and the analysis information storage 14 of the operation automation device 1, respectively.

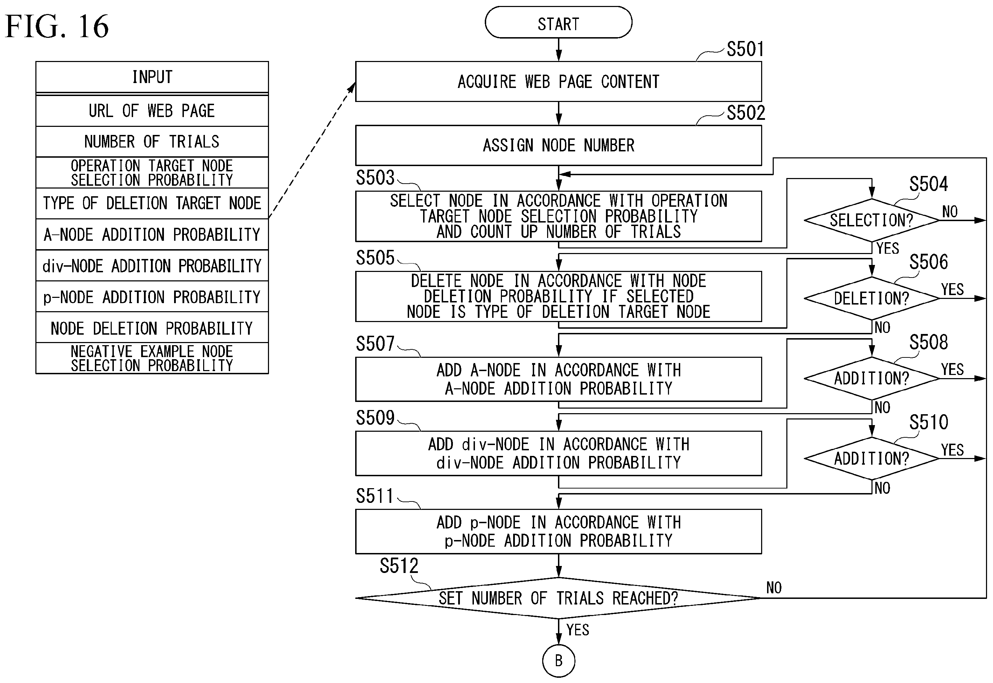

FIG. 16 is a flowchart showing an example of an operation of the pseudo-training data generator 42 shown in FIG. 15. The pseudo-training data generator 42 inputs a URL of a web page, the number of trials of a setting value, an operation target node selection probability, a deletion target node type, an A-node addition probability, a div-node addition probability, a p-node addition probability, a node deletion probability, and a negative example node selection probability. The pseudo-training data generator 42 generates a set of analysis information in which the movement source and the movement destination are correctly reflected to store the set of analysis information in the positive example storage 51 and generates a set of analysis information in which the movement source and the movement destination are not correctly reflected to store the set of analysis information in the negative example storage 52. Moreover, the pseudo-training data generator 42 stores the analysis information generated using the XPath before the movement for use in the regular training data generator 43 as described below in the analysis information DB of the analysis information storage 53.

The pseudo-training data generator 42 inputs a URL of an input web page to the web browser controller 45. The web browser controller 45 acquires a web page P1 indicated by the input web page URL with the web browser provided by the web browser 48 (step S501). The pseudo-training data generator 42 inputs an html representation P21 of web page content P20 of the web page P1 acquired in step S501 to the HTML/syntax tree convertor 46. The HTML/syntax tree convertor 46 converts the input html representation P21 into a syntax tree representation P22. The HTML/syntax tree convertor 46 assigns a node number to the syntax tree representation P22 and embeds the assigned node number in the html representation P21 (step S502).

The pseudo-training data generator 42 follows the nodes of the syntax tree representation P22, selects an operation target node in accordance with the operation target node selection probability, and counts up the number of trials (step S503). When no operation target node is selected in step S503 (step S504: NO), the pseudo-training data generator 42 iterates the process from step S503.

When an operation target node has been selected in step S503 (step S504: YES), if the node type of the selected operation target node is a deletion target node type, the pseudo-training data generator 42 deletes the selected operation target node from the syntax tree representation P22 of the web page content P20 in accordance with the node deletion probability (step S505). At this time, if the selected operation target node has child or grandchild nodes, the pseudo-training data generator 42 also deletes these nodes from the syntax tree representation P22 of the web page content P20 at the same time. When the operation target node has been deleted in step S505 (step S506: YES), the pseudo-training data generator 42 iterates the process from step S503.

When the node has not been deleted in step S503 (step S506: NO), the pseudo-training data generator 42 adds an A node to the syntax tree representation P22 of the web page content P20 in accordance with the A node addition probability (step S507). The A node is a web element using a tag. When the A node has been added in step S507 (step S508: YES), the pseudo-training data generator 42 iterates the process from step S503.

When the A node has not been added in step S507 (step S508: NO), the pseudo-training data generator 42 adds a div node to the syntax tree representation P22 of the web page content P20 in accordance with the div node addition probability (step S509). The div node is a web element using a div tag. When the div node has been added in step S509 (step S510: YES), the pseudo-training data generator 42 iterates the process from step S503.

When the div node has not been added in step S509 (step S510: NO), the pseudo-training data generator 42 adds a p node to the syntax tree representation P22 of the web page content P20 in accordance with the p node addition probability (step S511). The p node is a web element using a p tag.

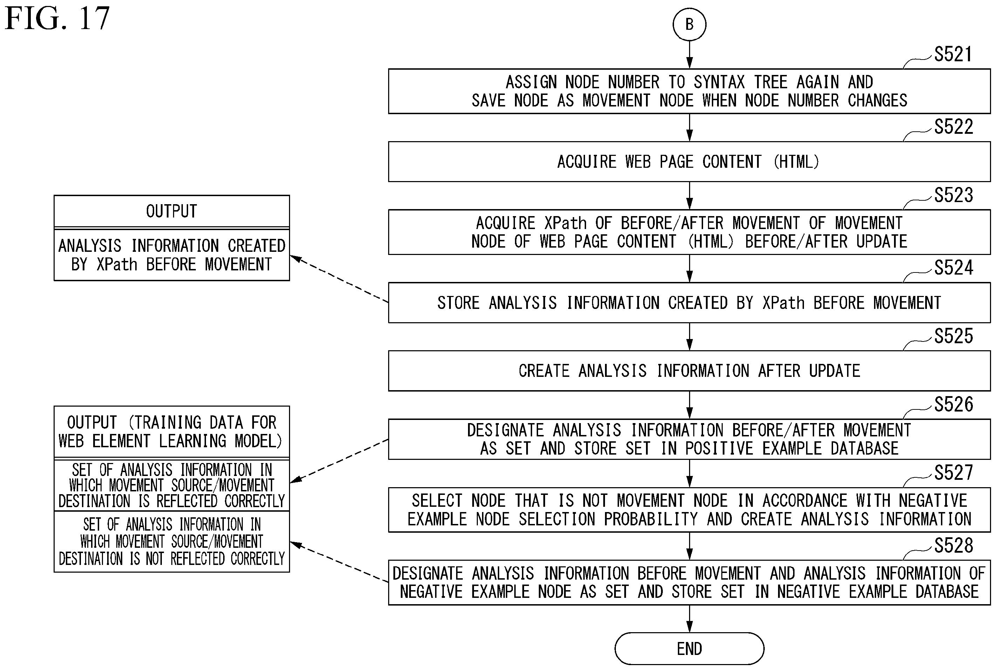

The pseudo-training data generator 42 determines whether the number of trials counted up in step S503 has reached the input setting value of the number of trials (step S512). When it is determined that the number of trials has not reached the setting value (step S512: NO), the pseudo-training data generator 42 iterates the process from step S503. When it is determined that the number of trials has reached the setting value (step S512: YES), the pseudo-training data generator 42 performs the process shown in FIG. 17.

FIG. 17 is a flowchart showing a process subsequent to FIG. 16. The pseudo-training data generator 42 reassigns a node number to the syntax tree representation P22 after the processing of steps S503 to S511 is performed. The pseudo-training data generator 42 saves nodes whose node numbers have changed from those before the processing of steps S503 to S511 is performed as movement nodes (step S521).

The pseudo-training data generator 42 inputs an updated syntax tree representation P22 to the HTML/syntax tree convertor 46. The HTML/syntax tree convertor 46 converts the input syntax tree representation into an html representation P21 and embeds a node number. The HTML/syntax tree convertor 46 returns an html representation P21 of an updated web page content P20 to the pseudo-training data generator 42 (step S522).

The pseudo-training data generator 42 outputs the html representation P21 of the web page content P20 before the update, the html representation P21 of the web page content P20 after the update, the node number of the movement node before the movement, and the node number of the movement node after the movement to the web browser controller 45. The web browser controller 45 uses the web browser provided by the web browser 48 to acquire the XPath of the movement node before the movement from the html representation P21 of the web page content P20 before the update and the XPath of the movement node before the movement from the html representation P21 of the web page content P20 after the update and outputs the acquired XPaths to the pseudo-training data generator 42 (step S523).

The pseudo-training data generator 42 instructs the analysis information generator 47 to generate analysis information using the XPath of the movement node before the movement. That is, the pseudo-training data generator 42 outputs the URL of the input web page, the XPath of the movement node before the movement and the syntax tree representation P22 and the html representation P21 of the web page content P20 before the movement to the analysis information generator 47. The analysis information generator 47 uses these information items as the inputs and performs a process similar to that in FIG. 14 to generate analysis information A1. The analysis information generator 47 outputs the generated analysis information A1 to the pseudo-training data generator 42. The pseudo-training data generator 42 stores the generated analysis information A1 in the analysis information storage 53 (step S524). The generated analysis information A1 is used for a process of the regular training data generator 43 to be described below.

The pseudo-training data generator 42 instructs the analysis information generator 47 to generate analysis information using the XPath after the movement of the movement node. That is, the pseudo-training data generator 42 outputs the URL of the input web page, the XPath of the movement node after the movement, and the syntax tree representation P22 and the html representation P21 of the web page content P20 after the movement to the analysis information generator 47. The analysis information generator 47 uses these information items as the inputs and performs a process similar to that in FIG. 14 to generate analysis information A1. The analysis information generator 47 outputs the generated analysis information A1 after the web page update to the pseudo-training data generator 42 (step S525).

The pseudo-training data generator 42 designates the analysis information A1 before the movement of the movement node obtained in step S514 and the analysis information A1 after the movement of the movement node obtained in step S515 as a set and stores the set as positive example training data in the positive example database of the positive example storage 51 (step S526).

The pseudo-training data generator 42 selects a node that is not a movement node from the syntax tree representation P22 of the web page content P20 after the update in accordance with the input negative example node selection probability. The pseudo-training data generator 42 generates analysis information A1 of the selected node in a process similar to a process of generating analysis information of the movement node (step S527).

The pseudo-training data generator 42 designates the analysis information A1 of the movement node before movement obtained in step S514 and the analysis information A1 generated in step S517 as a set and stores the set as negative example training data in the negative example database of the negative example storage 52 (step S528).

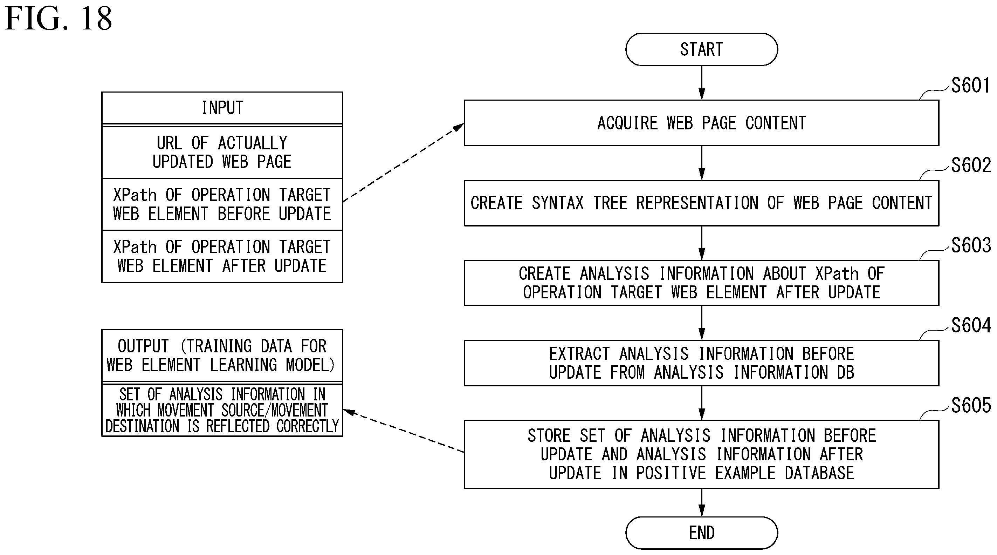

FIG. 18 is a flowchart showing an example of an operation of the regular training data generator 43 shown in FIG. 15. The regular training data generator 43 inputs a URL of an actually updated web page, an XPath of an operation target web element before the web page update, and an XPath of an operation target web element after the web page update and outputs a plurality of sets of analysis information in which the movement source and the movement destination are correctly reflected. An input to the regular training data generator 43 needs to be provided separately by a means other than that of the present embodiment. For example, these inputs may be input by a user through an input (not shown), may be read from a storage or recording medium (not shown), or may be received or read from another information processing device. Moreover, the regular training data generator 43 assumes that the analysis information of the web element of the updated web page before the update has been generated by the pseudo-training data generator 42.

The regular training data generator 43 inputs the URL of the actually updated web page to the web browser controller 45. The web browser controller 45 acquires the web page P1 indicated by the URL of the web page with the web browser provided by the web browser 48 (step S601). The regular training data generator 43 inputs the html representation P21 of the web page content P20 of the web page P1 acquired in step S601 to the HTML/syntax tree convertor 46. The HTML/syntax tree convertor 46 converts the input html representation P21 into a syntax tree representation P22 (step S602). The HTML/syntax tree convertor 46 embeds the node number in the syntax tree representation P22 into the html representation P21.

The regular training data generator 43 outputs a URL of the actually updated web page, an XPath of the updated target web element, a syntax tree representation P22 of the web page content P20 generated in step S602, and a syntax tree representation P22 of the web page content P20 into which a node number has been embedded in step S602 to the analysis information generator 47. The analysis information generator 47 uses these information items as the inputs and performs a process similar to that in FIG. 14 to generate analysis information A1. The analysis information generator 47 outputs the generated analysis information A1 of the operation target web element after the web page update to the regular training data generator 43 (step S603).

The regular training data generator 43 retrieves the analysis information DB stored in the analysis information storage 53 using the XPath of the operation target web element before the update as a key and reads analysis information A1 before the web page update (step S604). The regular training data generator 43 stores a set in which analysis information A1 before the web page update read in step S604 and analysis information A1 after the web page update generated in step S603 are associated with each other in the positive example database of the positive example storage 51 as positive example training data.

After the processing of FIGS. 16 to 18, the learning device 44 inputs analysis information for each of the two web elements using the positive example training data stored in the positive example database of the positive example storage 51 and the negative example training data stored in the negative example database of the negative example storage 52 and trains the web element learning model for outputting a probability that one web element will be the movement destination of the other web element. As a specific example of such a learning process, for example, supervised learning for classification such as a support vector machine, a random forest, or a neural network may be used. The learning device 44 outputs the learned web element learning model. The operation automation device 1 saves the web element learning model output by the learning device 44 in the model storage 17. Moreover, the operation automation device 1 may also acquire and store a program for implementing the RPA 15 together with the web element learning model.

When a web element to be operated within an RPA scenario is designated by an XPath, a logical structure of the web page is changed and the XPath of the operation target web element may be changed even though the appearance of the web page remains substantially unchanged. In such a case, the operation automation device of the present embodiment can automatically acquire a new XPath from the web page and continue the operation.

The functions of the operation automation device 1 in the above-mentioned embodiment may be implemented by a computer. In this case, a program for implementing the functions of the RPA processor 15 and the web browser 16 may be recorded on a computer-readable recording medium, and the program recorded on the recording medium may be read into a computer system and executed to implement the functions. The program may also be provided through a network. The "computer system" used here is assumed to include an operating system (OS) or hardware such as peripheral devices. Moreover, the "computer-readable recording medium" refers to a flexible disk, a magneto-optical disc, a read-only memory (ROM), a portable medium such as a compact disc-ROM (CD-ROM), or a storage device such as a hard disk embedded in the computer system. Furthermore, the "computer-readable recording medium" may include a computer-readable recording medium for dynamically holding the program for a short time period as in a communication line when the program is transmitted via a network such as the Internet or a communication circuit such as a telephone circuit and a computer-readable recording medium for holding the program for a given time period as in a volatile memory inside the computer system serving as a server or a client when the program is transmitted. Moreover, the above-described program may be a program for implementing some of the above-described functions. Furthermore, the above-described program may be a program capable of implementing the above-described function in combination with a program already recorded on the computer system.

The operation automation device 1 may be implemented by a plurality of computer devices connected to a network. In this case, any of the plurality of computer devices can optionally be used to implement each functional unit of the operation automation device 1. Moreover, the same functional unit may also be implemented by the plurality of computer devices. For example, one or more of the scenario storage 13, the analysis information storage 14, and the model storage 17 may be implemented by a computer device different from the computer device in which the RPA processor 15 and the web browser 16 of the operation automation device 1 are implemented. The model storage 17 may also be provided in a model storage device connected to the operation automation device 1. In this case, one model storage device may be connected to a plurality of operation automation devices 1.

Likewise, the model generation device 4 may be implemented by a plurality of computer devices connected to a network. In this case, it is possible to arbitrarily determine which of the plurality of computer devices implements each functional unit of the model generation device 4. Moreover, the same functional unit may be implemented by the plurality of computer devices.

Although the case where the operation automation device 1 and the model generation device 4 are different devices has been described above, they may be an integrated device. In this case, the web browser controller 241 may have the function of the web browser controller 45, the HTML/syntax tree convertor 243 may have the function of the HTML/syntax tree convertor 46, the analysis information generator 244 may have the function of the analysis information generator 47, and the web browser 16 may also function as the web browser 48.

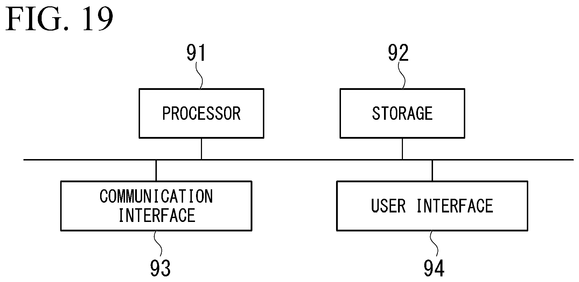

FIG. 19 is a device configuration diagram showing an example of a hardware configuration of the operation automation device 1. The operation automation device 1 includes a processor 91, a storage 92, a communication interface 93, and a user interface 94. The processor 91 is a central arithmetic device that performs calculations and control. The processor 91 is, for example, a central processing unit (CPU) or a graphics processing unit (GPU). The processor 91 implements the functions of the RPA processor 15 and the web browser 16 by reading and executing a program from the storage 92. The storage 92 implements the scenario storage 13, the analysis information storage 14, and the model storage 17. The storage 92 further has a work area and the like when the processor 91 executes various types of programs. In this way, the storage 92 stores a program for implementing the RPA 15 and the web element learning model. The communication interface 93 is communicatively connected to other devices. The user interface 94 is an input device such as a keyboard, a pointing device (a mouse, a tablet, or the like), a button, or a touch panel and a display device such as a display. An artificial operation is input by the user interface 94. The input 11 and the display 12 are implemented by the user interface 94.

Moreover, the configuration of the model generation device 4 is similar to the hardware configuration example shown in FIG. 19. In this case, the processor 91 implements the functions of the controller 41, the pseudo-training data generator 42, the regular training data generator 43, the learning device 44, the web browser controller 45, the HTML/syntax tree convertor 46, the analysis information generator 47, and the web browser 48 by reading and executing a program from the storage 92. The storage 92 implements the positive example storage 51, the negative example storage 52, and the analysis information storage 53.

All or some of the functions of the operation automation device 1 and the model generation device 4 may be implemented using hardware such as an application-specific integrated circuit (ASIC), a programmable logic device (PLD), or a field-programmable gate array (FPGA).

According to the embodiment described above, even if the operation target web page is changed after an automatic operation scenario is created, the operation automation system 10 can continue the automatic operation by estimating the changed web element. Moreover, if the operation target web page is changed after the automatic operation scenario is created and the operation target web element cannot be found, the operation automation system 10 can continue the automatic operation at a minimum cost by proposing an alternative web element. Moreover, when the operation target web page is changed after the automatic operation scenario is created, the operation automation system 10 can reduce the scenario modification cost by proposing an alternative web element.

According to the above-described embodiment, the operation automation system has a function of operating a web application directly or by using a web browser, which is an external system. Moreover, the operation automation system stores a web page identifier and a web element identifier for identifying an operation target web element and the operation content for the operation target web element as a scenario, and executes this scenario to automate an operation on a web application. In addition to the web page identifier and the web element identifier, the operation automation system stores auxiliary information for identifying the operation target. When the operation target indicated by the web page identifier and the web element identifier described in the scenario is absent at the time of scenario execution, the operation automation system uses the auxiliary information to analyze the content of the web page, creates new candidates for the operation target and an index indicating a possibility that the candidate will be actually the operation target, and continues execution of the scenario using the web element selected by the user from the candidates as the new operation target. Alternatively, the operation automation system continues execution of the scenario using a web element selected from the candidates as a new operation target.

The operation automation system may use analysis information and a web element learning model as auxiliary information for identifying the operation target. The analysis information includes content around the operation target web element in the web page at the time of scenario creation and is information that summarizes information about the web page to be operated. Moreover, the web element learning model is extracted from the entire web page. When the operation automation system creates new candidates for the operation target web element because there is no operation target web element identified by the web page identifier and web element identifier described in the scenario at the time of scenario execution, the operation automation system generates analysis information equivalent to that at the time of scenario creation with respect to each web element included in the web page at the time of scenario execution, and calculates an index of a possibility that each of these web elements will be an operation target at the time of scenario creation moved by updating a web page, using the analysis information of the target web element at the time of scenario creation, the generated analysis information of each web element, and the web element learning model.

The analysis information may include information about a web page where the operation target web element is located, a web element identifier of the operation target web element, information about extracted content of a web page around the operation target web element, a web element identifier of the web element around the operation target web element, and information about extracted content of the web page around the web element. Moreover, the operation automation system may select a predetermined number of web elements close to an operation target web element on a syntax tree when the content of the web page is represented by the syntax tree, and set the selected web elements as the web elements around the operation target web element.

The operation automation system may select web elements close to the operation target web element in the scenario in execution, on the syntax tree of the web page at the time of scenario execution or in the coordinate position on the display screen, as candidates for a new operation target. Thereby, the processing time for creating candidates may be shortened and the accuracy may be improved.

Moreover, a plurality of pairs of content of a web page at a certain point in time and web elements added, deleted, or moved within the same page due to a subsequent web page update may be provided and the operation automation system may use the provided pairs to train the web element learning model. Moreover, the operation automation system may generate a web page updated in a pseudo manner by adding, deleting, or moving a predetermined type of node with a predetermined probability with respect to a syntax tree generated from the content of the web page, and further use the pair of the original web page and the web page updated in the pseudo manner to train the web element learning model.

The operation automation system may store analysis information within the auxiliary information for identifying the operation target in linkage with a scenario and store the web element learning model together with the computer program body.

While embodiments of the present invention have been described with reference to the drawings, it should be understood that these are exemplary of the invention and are not to be considered as limiting. Therefore, additions, omissions, substitutions, and other modifications of constituent elements can be made without departing from the technical spirit or scope of the present invention.

## Claims

1. An operation automation system comprising:
a storage configured to store a scenario including a web page identifier for identifying a web page, an operation target web element identifier for identifying an operation target web element within the web page, and a web operation on the operation target web element and store analysis information including information about description of the operation target web element and information about description of a surrounding web element that is a web element around the operation target web element acquired based on a pre-update web page that is a web page at the time of creation of the scenario as auxiliary information for identifying the operation target in the web page; and
a scenario executor configured to read a web page of the web page identifier included in the scenario with a web browser, perform a determination process of determining whether or not the operation target web element identifier is present within the read web page, perform the web operation on the operation target web element as the web element identified by the operation target web element identifier when it is determined that the operation target web element identifier is present in the determination process, perform an analysis process of selecting a new operation target web element from among web elements included in the web page by analyzing content of the read web page using the auxiliary information when it is determined that the operation target web element identifier is absent in the determination process, and perform the web operation for the operation target web element on the new operation target web element selected in the analysis process.

2. The operation automation system according to claim 1,
wherein, in the analysis process, the scenario executor designates at least some web elements included in a post-update web page that is the web page at the time of execution of the scenario as new operation target candidates, generates analysis information including information about description of a web element of the candidate and information about description of a web element around the web element of the candidate acquired based on the post-update web page for each candidate, calculates an index indicating a possibility that the candidate will be a new operation target using the generated analysis information of the candidate and the analysis information of the operation target web element read from the storage, narrows down the number of candidates based on the calculated index, and designates a candidate web element narrowed down in the analysis process or a web element selected by a user from a plurality of candidate web elements narrowed down in the analysis process, as the new operation target web element.

3. The operation automation system according to claim 2,
wherein the scenario executor acquires a tag of the operation target web element or information of a display position from the analysis information of the operation target web element and selects a web element having the same tag as the operation target web element or a web element whose display position is within a predetermined range from the display position of the operation target web element among web elements of the post-update web page as the candidate.

4. The operation automation system according to claim 1,
wherein the analysis information includes identification information of the web page, the operation target web element identifier, content around the operation target web element in the pre-update web page, a surrounding web element identifier for identifying the surrounding web element, and content around the surrounding web element in the pre-update web page.

5. The operation automation system according to claim 1,
wherein the surrounding web element is another web element that has a short distance from the operation target web element in a syntax tree of the web element included in the web page.

6. The operation automation system according to claim 2,
wherein the auxiliary information further includes a model for calculating the index using the analysis information of the candidate and the analysis information of the operation target web element.

7. The operation automation system according to claim 6, the operation automation system further comprising:
a learner configured to train the model using a plurality of items of training data of a set of analysis information of an operation target web element obtained based on a pre-update learning web page and analysis information of a new operation target web element obtained based on the learning web page that has been updated.

8. The operation automation system according to claim 7,
wherein the learner trains the model further using a plurality of items of training data of a set of analysis information of an operation target web element obtained based on a learning web page and analysis information of a new operation target web element obtained based on a web page updated by adding, moving, or deleting a web element according to a predetermined probability with respect to the learning web page or a web element that is not a new operation target.

9. The operation automation system according to claim 1, the operation automation system further comprising:
a scenario editor configured to generate analysis information about an operation target web element included in an edited scenario and write the generated analysis information to the storage in association with the generated scenario.

10. An operation automation device comprising:
a storage configured to store a scenario including a web page identifier for identifying a web page, an operation target web element identifier for identifying an operation target web element within the web page, and a web operation on the operation target web element and store analysis information including information about description of the operation target web element and information about description of a surrounding web element that is a web element around the operation target web element acquired based on a pre-update web page that is a web page at the time of creation of the scenario as auxiliary information for identifying the operation target in the web page; and
a scenario executor configured to read a web page of the web page identifier included in the scenario with a web browser, perform a determination process of determining whether or not the operation target web element identifier is present within the read web page, perform the web operation on the operation target web element as the web element identified by the operation target web element identifier when it is determined that the operation target web element identifier is present in the determination process, perform an analysis process of selecting a new operation target web element from among web elements included in the web page by analyzing content of the read web page using the auxiliary information when it is determined that the operation target web element identifier is absent in the determination process, and perform the web operation for the operation target web element on the new operation target web element selected in the analysis process.

11. An operation automation method comprising:
acquiring a scenario from a storage storing a scenario including a web page identifier for identifying a web page, an operation target web element identifier for identifying an operation target web element within the web page, and a web operation on the operation target web element and storing analysis information including information about description of the operation target web element and information about description of a surrounding web element that is a web element around the operation target web element acquired based on a pre-update web page that is a web page at the time of creation of the scenario as auxiliary information for identifying the operation target in the web page, reading a web page of the web page identifier included in the acquired scenario with a web browser, and determining whether or not the operation target web element identifier is present within the read web page; and
performing the web operation on the operation target web element as the web element identified by the operation target web element identifier when it is determined that the operation target web element identifier is present in the determination, performing an analysis process of selecting a new operation target web element from among web elements included in the web page by analyzing content of the read web page using the auxiliary information when it is determined that the operation target web element identifier is absent in the determination, and performing the web operation for the operation target web element on the new operation target web element selected in the analysis process.

12. A program for causing a computer to function as the operation automation system according to any one of claims 1 to 9.
